# EUROPÄISCHE PATENTSCHRIFT

(11) **EP 4 049 129 B1**
(45) Veröffentlichungstag und Bekanntmachung des Hinweises auf die Patenterteilung: **08.01.2025**
(21) Anmeldenummer: 20811619.4
(22) Anmeldetag: 23.11.2020
(51) Int. Cl.: G06F 8/35

(54) **VERFAHREN ZUM VERKNÜPFEN VON OBJEKTEN EINES STEUERPROGRAMMS EINER STEUEREINHEIT EINES AUTOMATISIERUNGSSYSTEMS UND ENTWICKLUNGSUMGEBUNG**
METHOD FOR LINKING OBJECTS OF A CONTROL PROGRAM OF A CONTROL UNIT OF AN AUTOMATION SYSTEM, AND DEVELOPMENT ENVIRONMENT
PROCÉDÉ POUR RELIER DES OBJETS D'UN PROGRAMME DE COMMANDE D'UNE UNITÉ DE COMMANDE D'UN SYSTÈME D'AUTOMATISATION ET ENVIRONNEMENT DE DÉVELOPPEMENT

(30) Priorität: 25.11.2019 DE 102019131814
(43) Veröffentlichungstag der Anmeldung: 31.08.2022
(73) Patentinhaber: Beckhoff Automation GmbH, 33415 Verl (DE)
(72) Erfinder: GOLDSTEIN, Sven, 32257 Buende (DE); MERSCH, Henning, 33415 Verl (DE); MERSCH, Tina, 33415 Verl (DE)
(74) Vertreter: Patentanwaltskanzlei WILHELM & BECK
(86) Internationale Anmeldenummer: PCT/EP2020/083087
(87) Internationale Veröffentlichungsnummer: WO 2021/105064

(56) Entgegenhaltungen:
- ANONYMOUS: "Facade pattern - Wikipedia", 1 November 2019 (2019-11-01), pages 1 - 10, XP093102730, Retrieved from the Internet <URL:https://en.wikipedia.org/w/index.php?title=Facade_pattern&oldid=924094680> [retrieved on 20231117]
- LUDER A ET AL: "One step towards an industry 4.0 component", 2017 13TH IEEE CONFERENCE ON AUTOMATION SCIENCE AND ENGINEERING (CASE), IEEE, 20 August 2017 (2017-08-20), pages 1268 - 1273, XP033299416, DOI: 10.1109/COASE.2017.8256275
- TOM BURKE ET AL: "OPC UA von Beckhoff: Technologie, Produkte, Vorsprung", 1 December 2017 (2017-12-01), XP055771440, Retrieved from the Internet <URL:https://download.beckhoff.com/download/document/catalog/Beckhoff_TwinCAT_OPC_UA_d.pdf> [retrieved on 20210202]
- ANONYMOUS: "Wikipedia - Data mapping", 18 June 2019 (2019-06-18), XP055771608, Retrieved from the Internet <URL:https://en.wikipedia.org/w/index.php?title=Data_mapping&oldid=902374536> [retrieved on 20210203]

## Beschreibung

Die Erfindung betrifft ein Verfahren, welches in Anspruch 1 definiert ist, zum Verknüpfen von Objekten gemäß dem Datenkommunikationsstandards Open Platform Communication Unified Architecture (im Folgenden: OPC UA Objekten) mit Objekten eines PLC Codes eines Steuerprogramms einer Speicherprogrammierbaren Steuerung eines Automatisierungssystems welches in Anspruch 14 definiert ist. Die Erfindung betrifft ferner eine Entwicklungsumgebung welche in Anspruch 11 definiert ist und die eingerichtet ist, das erfindungsgemäße Verfahren auszuführen.

Das Dokument "One step towards an industry 4.0 component", LUDER A ET AL, 2017 13TH IEEE CONFERENCE ON AUTOMATION SCIENCE AND ENGINEERING (CASE), DOI: 10.1109/ COASE.2017.8256275 beschreibt die Verwendung des OPC UA Protokollstandards für die Steuerung von Automatisierungssystemen durch die Verwendung von speicherprogrammierbaren Steuerungen welche mit OPC UA Instanzen verknüpft werden.

Das Dokument "OPC UA von Beckhoff: Technologie, Produkte, Vorsprung", Tom Burke ET AL, https://download.beckhoff.com/download/document/catalog/Beckhoff_TwinCAT_OPC_UA_d.pdf beschreibt ebenfalls die Verwendung des OPC UA Protokollstandards für die Steuerung von Automatisierungssystemen durch die Verwendung von speicherprogrammierbaren Steuerungen welche mit OPC UA Instanzen verknüpft werden.

Vor dem Hintergrund der Industrie 4.0 Initiative und den Internet of Things (loT)-Bestrebungen ist in der industriellen Produktion ein Bestreben zu einem ständig wachsenden Grad an Digitalisierung und Zentralisierung industrieller Produktions- und Automatisierungsprozesse zu verzeichnen. Die Entwicklung industrieller Produktionsanlagen geht hin zu intelligenten Produktionsanlagen, in denen Geräte untereinander kommunizieren, Vorgänge aufeinander abstimmen und Prozessabläufe eigenständig regeln. Prozesse können in einer Cloud verfolgt, Daten zentralisiert analysiert und Abläufe über das Internet gesteuert werden. Hierzu bedarf es einer komplexen Datenkommunikationsstruktur, die es erlaubt, große Datenmengen und Information verlustarm und mit geringer Störanfälligkeit zu übertragen.

Ein weiterer Trend lässt sich in Gestalt einer ständig zunehmenden Interkompatibilität von Geräten unterschiedlicher Bauart und Hersteller erkennen. Ziel ist es, eine Produktionsanlage zu schaffen, in der unterschiedliche Einheiten verschiedenster Hersteller beliebig miteinander kombinierbar und untereinander austauschbar sind, mit lediglich einem Mindestaufwand an Programmierleistung.

Im Hinblick auf die Datenkommunikation und Informationsübertragung zwischen Komponenten verschiedener Ebenen eines Automatisierungssystems beziehungsweise zwischen Einheiten innerhalb einer Ebene hat sich der Service-orientierte Datenkommunikationsstandard Open Platform Communication Unified Architecture (OPC UA) zur Bereitstellung einer einheitlichen Datenkommunikation im Bereich der Automatisierungstechnik etablieren können. OPC UA basiert auf offenen Kommunikationsstandards und garantiert somit eine zuverlässige, robuste Kommunikation zwischen Kommunikationsteilnehmern basierend auf einer Server-Clients Architektur. Darüber hinaus stellt OPC UA ein einheitliches und standardisiertes Informationsmodell für die Informationsübertragung in Automatisierungssystemen verschiedenster industrieller Branchen bereit. Hierdurch ist gewährleistet, dass Information unterschiedlicher Geräte verschiedenster Hersteller innerhalb eines Automatisierungssystems einheitlich darstellbar ist.

Auch ist eine einheitliche Darstellung von Information von verschiedenen Automatisierungssystemen ermöglicht. Dies gewährleistet ein Höchstmaß an Interkompatibilität und ermöglicht dem Anwender eine problemlose Handhabung von Information unterschiedlichster Herkunft.

Im Kontext der Automatisierungspyramide wird OPC UA derzeit für die vertikale Kommunikation zwischen der Leitebene und der Prozessebene eines Automatisierungssystems und/oder für die horizontale Kommunikation zwischen Einheiten einer Ebene, beispielsweise zwischen zwei Steuereinheiten im Zuge einer Maschine-zu-Maschine-Kommunikation, verwendet. Der OPC UA Protokoll Standard bietet einen offenen Datenkommunikationsstandard, über den eine standardisierte Datenkommunikation und Informationsübertragung zwischen Elementen der Leitebene und Elementen der Prozessebene oder Feldbusebene eines Automatisierungssystems ermöglicht ist und ferner eine zentralisierte Datenanalyse mit einer Datenübertragung gegebenenfalls auch drahtlos über das Internet in ein geeignetes Cloud- oder Serversystem realisierbar ist. Ziel ist es, eine Datenkommunikation und Informationsübertragung zwischen beliebigen Geräten herstellerunabhängig und branchenübergreifend und ohne umfangreichen Programmieraufwand zu erreichen, bei der die übertragene Information in standardisierter Form darstellbar und somit aufwandslos einsehbar, interpretierbar und verarbeitbar ist.

Für eine standardisierte Datenkommunikation bzw. Informationsübertragung sind in Zusammenarbeit verschiedener Industrieteilnehmer branchenspezifische Informationsmodelle gemäß dem OPC UA Kommunikationsstandard in sogenannten Companion Specifications spezifiziert worden. In diesen Companion Specifications sind für die jeweiligen Branchen Informationsmodelle definiert.

Hierzu werden in den OPC UA Companion Specifications Objekttypen, Variablentypen, Datentypen und Referenztypen definiert, in denen Information einer Geräteklasse gemäß dem OPC UA Standard übertragbar und darstellbar ist. Die definierten Typen richten sich hierbei nach den von der OPC Foundation vorgegebenen Standards und nach den in den Branchen üblichen Konzepten zur Informationsübertragung und Datenkommunikation.

So ist beispielsweise in der durch das PLCopen Konsortium definierten Companion Specification eine Kompatibilität zwischen dem OPC UA Protokoll Standard und Kommunikationsstandards für Speicher Programmierbare Steuerungen (SPS) definiert. Darüber hinaus können Kompatibilitäten zwischen verschiedenen Herstellern gewährleistet werden, indem in Companion Specifications vorgeschrieben wird, wie Variablenstrukturen beziehungswiese Funktionsbausteine, insbesondere Objekte, eines PLC-Codes beziehungsweise eines SPS-Steuerprogramms auf OPC UA Objekte abzubilden sind.

Die Verwendung des OPC UA Protokoll Standards mit entsprechenden Companion Specifications für bestimmte Geräteklassen einer Automatisierungsanlage ermöglicht die herstellerübergreifende Verwendung von Geräten der entsprechenden Geräteklasse ohne zusätzlichen Programmieraufwand. Die Companion Specification definiert beispielsweise eine einheitliche Datenstruktur beziehungsweise einheitliche Datenstrukturen in Bezug auf den OPC UA Protokoll Standard für Geräte der jeweiligen Geräteklasse.

Um in einem Automatisierungssystem auf den OPC UA Protokoll Standard zurückgreifen zu können und eine standardisierte Übermittlung und Darstellung von Information bereitstellen zu können, bedarf es einer Übertragung der für die einzelnen Einheiten des Automatisierungssystems genutzten Informationsmodelle auf das OPC UA Informationsmodell. Dies ist derzeit nicht ohne einen substantiellen Programmieraufwand zu erreichen, in dem ein Mapping beziehungsweise eine Abbildung der Informationseinheiten der Informationsmodelle der Einheiten des Automatisierungssystems auf die Informationseinheiten des OPC UA Informationsmodells vorzunehmen ist.

Es ist daher eine Aufgabe der Erfindung, ein Verfahren bereitzustellen, das eine vereinfachte und effiziente Abbildung eines Informationsmodells einer Gerätegruppe eines Automatisierungssystems auf ein OPC UA Informationsmodell für die bestimmte Geräteklasse ermöglicht. Ferner ist es eine Aufgabe der Erfindung, eine Entwicklungsumgebung zum Ausführen des erfindungsgemäßen Verfahrens bereitzustellen.

Die Aufgabe wird durch ein Verfahren und eine Entwicklungsumgebung gemäß den unabhängigen Ansprüchen gelöst. Bevorzugte Ausführungsformen sind in den abhängigen Ansprüchen angegeben.

Nach einem Aspekt der Erfindung wird ein Verfahren zum Verknüpfen von Objekten des Datenkommunikationsstandards Open Platform Communication Unified Architecture OPC UA mit Objekten eines PLC Codes eines Steuerprogramms einer Steuereinheit eines Automatisierungssystems bereitgestellt, wobei das Verfahren die Schritte umfasst:
Einlesen eines OPC UA Nodesets einer Companion Specification in einem Leseschritt, wobei das OPC UA Nodeset eine Definition von OPC UA Objekttypen eines in der Companion Specification definierten OPC UA Informationsmodells umfasst;
Generieren von OPC UA Instanzen der OPC UA Objekttypen des OPC UA Nodesets für das Automatisierungssystem und Zusammenfassen der OPC UA Instanzen in einem OPC UA Instanznodeset in einem Instanziierungsschritt, wobei generierte Instanzen des OPC UA Instanznodesets Komponenten eines Automatisierungsprozesses des Automatisierungssystems beschreiben und jeweils mindestens einen OPC UA Objekttyp des OPC UA Nodesets aufweisen;
Generieren von PLC Objekten in einem PLC Code eines Steuerprogramms des Automatisierungssystems in einem Objektgenerierungsschritt, wobei PLC Objekte im PLC Code Komponenten des Automatisierungsprozesses des Automatisierungssystems beschreiben und jeweils einen PLC Objekttyp aufweisen; und
Verknüpfen der OPC UA Instanzen des OPC UA Instanznodesets mit PLC Objekten des PLC Codes des Steuerprogramms in einem Verknüpfungsschritt, wobei jede OPC UA Instanz mit genau dem PLC Objekt verknüpft wird, das im Steuerprogramm die gleiche Komponente des Automatisierungsprozesses des Automatisierungssystems beschreibt, wobei durch eine Verknüpfung einer OPC UA Instanz des OPC UA Instanznodesets mit einem PLC Objekt des PLC Codes bewirkt ist, dass Information des PLC Objekts lesend und schreibend über die OPC UA Instanz zugänglich ist.

Hierdurch wird der technische Vorteil erreicht, dass ein Verfahren bereitgestellt wird, mittels dem eine Verknüpfung zwischen Objekten des OPC UA Kommunikationsstandards und Objekten eines in einer PLC Programmiersprache programmierten Steuerprogramms mit einem substanziell reduzierten Programmieraufwand ermöglicht ist.

Eine Verwendung des OPC UA Kommunikationsstandards für eine standardisierte Kommunikation zwischen Komponenten eines Automatisierungssystems bzw. für eine standardisierte Darstellung von Information gemäß einem OPC UA Informationsmodell setzt eine Verknüpfung zwischen Objekten, die im OPC UA Kommunikationsstandard definiert sind, und Objekten eines Steuerprogramms des Automatisierungssystems voraus, über die von einer speicherprogrammierbaren Steuerung SPS des Automatisierungssystems Information bezüglich der einzelnen Komponenten des Automatisierungssystems bereitgestellt wird. Eine Verknüpfung zwischen Objekten des OPC UA Kommunikationsstandards und Objekten des PLC Codes des Steuerprogramms des Automatisierungssystems bewirkt dabei, dass über ein Ausführen eines Objekts des OPC UA Kommunikationsstandards eine in dem jeweils mit dem Objekt des OPC UA Kommunikationsstandards verknüpften Objekt des PLC Codes des Steuerprogramms gespeicherte Information gemäß dem Informationsmodell des OPC UA Kommunikationsstandards abgerufen, dargestellt und gegebenenfalls übermittelt werden kann.

In den Companion Specifications verschiedener Branchen sind Datenstrukturen derjeweils für eine Datenkommunikation bzw. Informationsübertragung zu verwendenden Objekte des OPC UA Kommunikationsstandards, im Folgenden OPC UA Objekte, in Form von OPC UA Objekttypen definiert.

Das erfindungsgemäße Verfahren sieht eine einfache und effektive Verknüpfung von OPC UA Objekten gemäß den in Companion Specifications definierten OPC UA Objekttypen mit entsprechenden Objekten eines PLC Codes eines Steuerprogramms, im Folgenden PLC Objekten, vor.

Hierzu wird in einem Leseschritt ein OPC UA Nodeset einer Companion Specification eingelesen. Ein OPC UA Nodeset ist eine Liste mit allen OPC UA Objekttypen, die gemäß dem Informationsmodell in der gegebenen Companion Specification für die jeweilige Branche definiert sind.

Objekttypen, sowohl OPC UA Objekttypen als auch PLC Objekttypen, sind im Folgenden Datentypen der einzelnen Objekte des OPC UA Informationsmodells bzw. der Objekte des PLC Codes des Steuerprogramms. Objekttypen können hierbei Datentypen eines Objekts im Sinne einer objektorientierten Programmierung sein. Darüber hinaus können Objekttypen Variablentypen von Variablen, Datentypen von Dateneinheiten und Referenztypen von Referenzen zwischen Objekten, Variablen oder Dateneinheiten umfassen. Objekttypen beschreiben somit im Folgenden Typen bzw. Strukturen von Objekten, Variablen, Dateneinheiten oder Referenzen, die im OPC UA Kommunikationsstandard bzw. dem Informationsmodell der jeweiligen Companion Specification oder aber in der verwendeten PLC Programmiersprache des Steuerprogramms definiert sind.

In einem Instanziierungsschritt werden basierend auf den OPC UA Objekttypen des eingelesenen OPC UA Nodesets für ein bestimmtes Automatisierungssystem OPC UA Instanzen generiert und die generierten OPC UA Instanzen in einem OPC UA Instanznodeset zusammengefasst. Bei der Instanziierung werden einzelne Komponenten eines Automatisierungssystems, für das eine Datenkommunikation bzw. Informationsübertragung auf Basis des OPC UA Kommunikationsstandards einzurichten ist, unter Berücksichtigung der im eingelesenen Nodeset der jeweiligen Companion Specification definierten OPC UA Objekttypen beschrieben. Eine OPC UA Instanz beschreibt somit eine Komponente eines durch das Automatisierungssystem gesteuerten Automatisierungsprozesses und weist einen OPC UA Objekttypen auf, der in der jeweiligen Companion Specification definiert ist.

Eine Komponente eines Automatisierungsprozesses kann im Folgenden ein Gerät, beispielsweise ein Feldgerät, eines Automatisierungssystems sein. Darüber hinaus kann eine Komponente eines Automatisierungsprozesses ein Vorgang bzw. ein Teilprozess des Automatisierungsprozesses oder eine beliebig gestaltete Größe sein, die eine quantifizierbare Aussage über einen Zustand des Automatisierungsprozesses ermöglicht.

Ferner werden in einem Objektgenerierungsschritt PLC Objekte in einem PLC Code eines Steuerprogramms des Automatisierungssystems generiert. PLC Objekte sind hierbei Objekte, Variablen oder Dateneinheiten des in einer PLC Programmiersprache generierten Steuerprogramms und beschreiben jeweils eine Komponente des Automatisierungsprozesses. Jedes PLC Objekt weist einen PLC Objekttypen auf, der jeweils ein Datentyp bzw. eine Datenstruktur eines Objekts, einer Variablen, einer Dateneinheit oder einer Referenz ist und in der jeweils verwendeten PLC Programmiersprache definiert ist. Das Generieren der PLC Objekte kann beispielsweise im Zuge der Programmierung des PLC Codes des Steuerprogramms erfolgen.

PLC Code ist im Folgenden ein in einer PLC Programmiersprache programmierter und durch eine SPS ausführbarer Programmcode.

Darauffolgend werden in einem Verknüpfungsschritt die generierten OPC UA Instanzen des OPC UA Instanznodeset mit den PLC Objekten des PLC Codes des Steuerprogramms verknüpft. Hierbei wird für jede OPC UA Instanz des OPC UA Instanznodesets eine Verknüpfung mit genau einem PLC Objekt realisiert. Eine OPC UA Instanz wird dabei mit genau dem PLC Objekt verknüpft, das gleiche Komponenten des Automatisierungsprozesses beschreibt. Eine Verknüpfung zwischen OPC UA Instanzen und PLC Objekten bewirkt hierbei, dass Information eines PLC Objekts über ein Ausführen der jeweils mit dem PLC Objekt verknüpften OPC UA Instanz zugänglich gemacht werden kann.

Ein Ausführen einer OPC UA Instanz umfasst im Folgenden das Aufrufen der entsprechenden OPC UA Instanz auf einem OPC UA Server durch einen OPC UA Client. Dies kann wiederum ein Einlesen der Information der OPC UA Instanz mittels eines entsprechenden Lesebefehls durch den OPC UA Client bzw. ein Schreiben von Information in die OPC UA Instanz mittels eines entsprechenden Schreibbefehls durch den OPC UA Client umfassen. Durch das Ausführen bzw. Aufrufen einer OPC UA Instanz auf dem OPC UA Server durch einen OPC UA Client kann somit Information eines mit der jeweiligen OPC UA Instanz verknüpften PLC Objekts ausgelesen werden, bzw. kann Information in das PLC Objekt geschrieben werden.

Dass Information eines PLC Objekts zugänglich ist, umfasst im Folgenden, dass Information des PLC Objekts ausgelesen bzw. Information in das PLC Objekt geschrieben werden kann.

Nach einer Ausführungsform umfasst das Verfahren ferner:
Generieren von PLC Objekttypen auf Basis der OPC UA Objekttypen des OPC UA Nodesets der Companion Specification in einem Objekttypgenerierungsschritt, wobei zu jedem OPC UA Objekttyp ein entsprechender PLC Objekttyp generiert wird.

Hierdurch wird der technische Vorteil erreicht, dass ein vereinfachtes Verfahren zum Verknüpfen von OPC UA Objekten und PLC Objekten bereitgestellt werden kann.

Hierzu werden in einem Objekttypgenerierungsschritt auf Basis der OPC UA Objekttypen des OPC UA Nodesets der Companion Specification PLC Objekttypen generiert. Im Objekttypgenerierungsschritt wird somit für jeden OPC UA Objekttypen, der im OPC UA Nodeset der Companion Specification definiert ist, ein entsprechender PLC Objekttyp generiert, der eine Datenstruktur aufweist, die der Datenstruktur des OPC UA Objekttyps entspricht. Im Folgenden entspricht ein OPC UA Objekttyp einem PLC Objekttyp, falls der OPC UA Objekttyp und der PLC Objekttyp eindeutig aufeinander abbildbar sind. Objekte sind im Folgenden eindeutig aufeinander abbildbar, wenn die Information des abgebildeten Objekts ohne Informationsverlust durch ein anderes Objekt repräsentiert werden kann. Bei Objekten mit komplexer Datenstruktur setzt das eine Übereinstimmung der Datenstrukturen der Objekte voraus.

Die im Objekttypgenerierungsschritt generierten PLC Objekttypen können in einem folgenden Programmierprozess zur Erstellung eines PLC Codes eines Steuerprogramms verwendet und zur Instanziierung von PLC Objekten des PLC Codes verwendet werden. Hierdurch wird der Vorteil erreicht, dass eine Programmierung eines PLC Codes eines Steuerprogramms unter Berücksichtigung der in Companion Specifications definierten OPC UA Objekttypen durchgeführt werden kann. Durch die Berücksichtigung der in den Companion Specifications definierten OPC UA Objekttypen können die im PLC Code des Steuerprogramms verwendeten PLC Objekttypen derart ausgewählt werden, dass eine eindeutige Abbildbarkeit der PLC Objekte des PLC Codes auf OPC UA Objekte gewährleistet ist und eine spätere Verknüpfung zwischen OPC UA Objekten und PLC Objekten vereinfacht wird.

Durch die Verwendung von PLC Objekttypen, die eindeutig auf entsprechende OPC UA Objekttypen abbildbar sind, für die Instanziierung von PLC Objekten des PLC Codes kann eine problemlose Verknüpfung der entsprechenden PLC Objekte mit den jeweiligen OPC UA Objekten erreicht werden, die im Vergleich zu einer Verknüpfung zwischen OPC UA Objekten und PLC Objekten, die keine kompatiblen Objekttypen aufweisen, und bei der einzelne Attribute, Funktionen, Variablen oder Referenzen einzeln aufeinander abzubilden sind, einen weitaus geringeren Programmieraufwand für die Verknüpfung benötigt.

Durch die vorliegende Ausführungsform des erfindungsgemäßen Verfahrens wird somit eine Programmierung eines PLC Codes eines Steuerprogramms begünstigt, bei der bereits von Beginn eine spätere Verknüpfung eine Kompatibilität zwischen Objekten des PLC Codes und OPC UA Objekten, deren Objekttyp in entsprechenden Companion Specifications definiert ist, berücksichtigt werden.

Nach einer Ausführungsform umfasst der Objektgenerierungsschritt:
Generieren von PLC Objekten auf Basis der OPC UA Instanzen des OPC UA Instanznodesets, wobei für jede OPC UA Instanz des OPC UA Instanznodessets ein PLC Objekt des PLC Codes generiert wird, das einen dem OPC UA Objekttyp der jeweiligen OPC UA Instanz entsprechenden PLC Objekttyp aufweist und dieselbe Komponente des Automatisierungsprozesses des Automatisierungssystems beschreibt wie die entsprechende OPC UA Instanz.

Hierdurch wird der technische Vorteil erreicht, dass ein Verfahren zum Verknüpfen von OPC UA Objekten und PLC Objekten bereitgestellt wird, das einen geringen Programmieraufwand benötigt. Hierzu werden im Objektgenerierungsschritt PLC Objekte auf Basis der OPC UA Instanzen des OPC UA Instanznodesets generiert. Für jede OPC UA Instanz des OPC UA Instanznodesets wird dabei ein PLC Objekt des PLC Codes generiert, wobei die OPC UA Instanz und das jeweilige PLC Objekt kompatible bzw. ineinander überführbare Objekttypen aufweisen und jeweils dieselbe Komponente des Automatisierungsprozesses beschreiben. Hierdurch kann zum einen der Programmieraufwand des Generierens des PLC Codes verringert werden, indem durch ein Generieren der PLC Objekte auf Basis der OPC UA Instanzen ein Instanziieren der PLC Objekte aus den PLC Objekttypen im PLC Code vermieden werden kann.

Durch die im Instanziierungsschritt bereits durchgeführte Instanziierung der OPC UA Objekttypen und der entsprechenden Generierung der OPC UA Instanzen ist eine Instanziierung von Objekten bzw. eine Beschreibung von Komponenten des Automatisierungsprozesses bereits vorgenommen worden. Durch eine Generierung von PLC Objekten auf Basis der OPC UA Instanzen ist erreicht, dass die Komponenten des Automatisierungsprozesses, die durch die OPC UA Instanzen dargestellt sind, in Gestalt der PLC Objekte ebenfalls im PLC Code des Steuerprogramms beschrieben sind. Eine Instanziierung der PLC Objekte im PLC Code basierend auf PLC Objekttypen, bei der jede einzelne beschreibende Komponente des Automatisierungsprozesses gemäß den im PLC Code definierten PLC Objekttypen instanziiert werden muss, entfällt.

Darüber hinaus kann eine Verknüpfung zwischen OPC UA Objekten bzw. OPC UA Instanzen und PLC Objekten vereinfacht werden, indem die auf Basis der OPC UA Instanzen generierten PLC Objekte eindeutig in die entsprechenden OPC UA Instanzen überführt werden können. Hierdurch ist wiederum eine umständliche Verknüpfung zwischen einzelnen Attributen, Funktionen, Variablen, Dateneinheiten oder Referenzen vermeidbar, indem miteinander zu verknüpfende OPC UA Instanzen und PLC Objekte eindeutig ineinander überführbar sind. Hierdurch wird erreicht, dass für eine OPC UA Instanz und ein PLC Objekt eine Verknüpfung zwischen beiden Objekten als geschlossene Einheiten genügt, um alle Attribute, Methoden oder sonstige Untereinheiten der Objekte ebenfalls miteinander zu verknüpfen.

Nach einer Ausführungsform umfasst der Instanziierungsschritt ferner:
Markieren einer jeden OPC UA Instanz des OPC UA Instanznodesets mit einem ersten Zuordnungsattribut in einem ersten Markierungsschritt;
wobei der Objektgenerierungsschritt ferner umfasst:
   Markieren eines jeden PLC Objekts mit einem zweiten Zuordnungsattribut in einem zweiten Markierungsschritt; und
   wobei der Verknüpfungsschritt ferner umfasst:
      Zuordnen einer OPC UA Instanz zu einem PLC Objekt auf Basis des ersten Zuordnungsattributs der OPC UA Instanz und des zweiten Zuordnungsattributs des PLC Objekts in einem Zuordnungsschritt, und
      Verknüpfen von jeweils einer OPC UA Instanz des OPC UA Instanznodesets mit jeweils dem im Zuordnungsschritt der OPC UA Instanz zugeordneten PLC Objekt.

Hierdurch wird der technische Vorteil erreicht, dass eine vereinfachte Verknüpfung zwischen OPC UA Instanzen und PLC Objekten bereitgestellt werden kann.

In einem ersten Markierungsschritt wird jede OPC UA Instanz des OPC UA Instanznodesets mit einem ersten Zuordnungsattribut markiert. In einem zweiten Markierungsschritt wird jedes entsprechende PLC Objekt des PLC Codes mit einem zweiten Zuordnungsattribut markiert. In einem Zuordnungsschritt werden darauffolgend OPC UA Instanzen und PLC Objekte auf Basis der ersten Zuordnungsattribute und der zweiten Zuordnungsattribute einander zugeordnet. Die Verknüpfung im Verknüpfungsschritt zwischen OPC UA Instanzen und PLC Objekten wird darauffolgend auf Basis der Zuordnungen zwischen OPC UA Instanzen und PLC Objekten durchgeführt.

Durch die Markierung der OPC UA Instanzen während der Instanziierung im Instanziierungsschritt und die Markierung der entsprechenden PLC Objekte während der Generierung im Objektgenerierungsschritt sind jede OPC UA Instanz anhand des ersten Zuordnungsattributs und jedes PLC Objekt anhand des zweiten Zuordnungsattributs eindeutig identifizierbar. Durch die eindeutige Identifizierbarkeit der OPC UA Instanzen und der PLC Objekte ist eine Zuordnung zwischen OPC UA Instanzen und PLC Objekten vereinfacht. Die Zuordnung zwischen OPC UA Instanzen und PLC Objekten identifiziert jeweils eine OPC UA Instanz und ein PLC Objekt, die im Verknüpfungsschritt miteinander zu verknüpfen sind.

Hierdurch ist eine Verknüpfung der OPC UA Instanzen und PLC Objekte vereinfacht und kann automatisch im Verknüpfungsschritt anhand der ersten und zweiten Zuordnungsattribute durchgeführt werden. Die ersten und zweiten Zuordnungsattribute können dabei derart ausgewählt werden, dass eine eindeutige Zuordnung zwischen OPC UA Instanzen und PLC Objekten ermöglicht ist. Ein Markierungsattribut ist im Folgenden eine Markierung, die eine eindeutige Identifizierung der markierten OPC UA Instanz bzw. des markierten PLC Objekts erlaubt.

Nach einer Ausführungsform umfasst der Objektgenerierungsschritt:
Generieren von PLC Objekten in einem PLC Code eines Steuerprogramms des Automatisierungssystems auf Basis der im Objekttypgenerierungsschritt generierten PLC Objekttypen.

Hierdurch wird der technische Vorteil erreicht, dass eine vereinfachte Programmierung eines PLC Codes eines Steuerprogramms ermöglicht ist. Ferner wird der Vorteil einer vereinfachten Verknüpfung zwischen OPC UA Instanzen und PLC Objekten erreicht, die mit einem reduzierten Programmieraufwand durchführbar ist.

Im Objektgenerierungsschritt werden hierzu die PLC Objekte des PLC Codes des Steuerprogramms auf Basis der im Objekttypgenerierungsschritt generierten PLC Objekttypen generiert. Die PLC Objekttypen wurden im Objekttypgenerierungsschritt auf Basis der OPC UA Objekttypen der Companion Specification generiert. Die generierten PLC Objekttypen entsprechen somit den OPC UA Objekttypen der Companion Specification und sind eindeutig in die OPC UA Objekttypen überführbar. Auf Basis dieser PLC Objekttypen werden im Objektgenerierungsschritt die PLC Objekte des PLC Codes generiert. Hierdurch ist gewährleistet, dass die generierten PLC Objekte Objekttypen aufweisen, die eindeutig und vollständig in Objekttypen der OPC UA Instanzen des OPC UA Instanznodesets überführbar sind.

Durch die Kompatibilität der Objekttypen der OPC UA Instanzen und der PLC Objekte ist eine Verknüpfung zwischen OPC UA Instanzen und PLC Objekten erreicht, die mit einem geringen Programmieraufwand durchführbar ist, da auf eine umständliche Verknüpfung von einzelnen Funktionen, Variablen, Dateneinheiten oder Referenzen verzichtet werden kann. Aufgrund der kompatiblen Objekttypen der PLC Objekte und der OPC UA Instanzen ist eine Verknüpfung von OPC UA Instanzen und PLC Objekten mit komplexen Datenstrukturen ermöglicht, bei der die einzelnen OPC UA Instanzen und PLC Objekte als zusammenhängende Einheiten miteinander verknüpft werden.

Durch die einander entsprechenden Datenstrukturen der OPC UA Instanzen und der PLC Objekte ist durch die Verknüpfung der OPC UA Instanzen und PLC Objekte als zusammenhängende Einheiten eine Verknüpfung zwischen einzelnen Attributen oder Funktionen der OPC UA Instanzen und der PLC Objekte mit bewirkt. Eine zusätzliche und aufwendige Verknüpfung der einzelnen Unterelemente der OPC UA Instanzen und der entsprechenden PLC Objekte entfällt somit. Die Ausführungsform des erfindungsgemäßen Verfahrens betrifft einen Fall, in dem eine Programmierung eines PLC Codes eines Steuerprogramms unter Berücksichtigung der in Companion Specifications definierten OPC UA Objekttypen durchgeführt wird.

Nach einer Ausführungsform umfasst der Objekttypgenerierungsschritt ferner:
Erstellen wenigstens einer PLC Bibliothek, die die generierten PLC Objekttypen umfasst.

Hierdurch wird der technische Vorteil erreicht, dass ein Verfahren zur Verknüpfung von OPC UA Instanzen und PLC Objekten bereitgestellt wird, das eine vereinfachte Verknüpfung mit einem verringerten Programmieraufwand ermöglicht. Durch das Erstellen wenigstens einer PLC Bibliothek, in der die generierten PLC Objekttypen abgelegt sind, kann eine einfache Berücksichtigung der PLC Objekttypen in einer Programmierung eines PLC Codes eines Steuerprogramms ermöglicht werden. Hierdurch kann wiederum der Programmieraufwand zum Generieren des PLC Codes des Steuerprogramms verringert werden und gleichzeitig gewährleistet werden, dass die generierten PLC Objekte als zusammenhängende Einheiten mit entsprechenden OPC UA Instanzen verknüpft werden können.

Nach einer Ausführungsform umfasst das Verfahren ferner:
Generieren wenigstens eines Extensible Markup Language XML-Dokuments entsprechend Vorgaben des PLCopen Konsortiums, das die generierten PLC Objekttypen und/oder die generierten PLC Objekte umfasst, in einem Dokumentgenerierungsschritt.

Hierdurch wird der technische Vorteil erreicht, dass das erfindungsgemäße Verfahren in einer beliebigen Entwicklungsumgebung durchgeführt werden kann. In einem Dokumentgenerierungsschritt wird wenigstens ein XML-Dokument entsprechend den Spezifikationen des PLCopen Konsortiums generiert, das die PLC Objekttypen und/oder die PLC Objekte umfasst. Das generierte XML-Dokument hat ein vom PLCOpen Konsortium definiertes unter PLCOpenXML bekanntes Datenformat und kann durch eine beliebige Entwicklungsumgebung eingelesen werden und die generierten PLC Objekttypen bzw. die generierten PLC Objekte können auf der entsprechenden Entwicklungsumgebung bei der Generierung eines PLC Codes berücksichtigt werden. Hierzu wird ein breiter Anwendungsbereich des erfindungsgemäßen Verfahrens erreicht und ein weiterer Beitrag zu einer Standardisierung von Prozessen in der Automatisierungstechnik erreicht. Alternativ kann ein PLCOpenXML-Dokument generierten PLC Code eines Steuerprogramms umfassen, wobei der PLC Code generierte PLC Objekttypen beziehungsweise generierte PLC Objekte umfassen kann.

Gemäß einem zweiten Aspekt der Erfindung wird eine Entwicklungsumgebung zum Ausführen des Verfahrens zum Verknüpfen von OPC UA Knoten mit Objekten eines PLC Codes einer Steuereinheit eines Automatisierungssystems bereitgestellt, wobei die Entwicklungsumgebung umfasst:
ein erstes Entwicklungsmodul, wobei das erste Entwicklungsmodul eingerichtet ist, wenigstens ein OPC UA Nodeset wenigstens einer OPC UA Companion Specification einzulesen, wobei das OPC UA Nodeset eine Definition von OPC UA Objekttypen eines in der Companion Specification definierten OPC UA Informationsmodells umfasst,
auf Basis der OPC UA Objekttypen des eingelesen OPC UA Nodesets den OPC UA Objekttypen entsprechende PLC Objekttypen zu generieren, und
ein OPC UA Instanznodeset von Instanzen der OPC UA Objekttypen des OPC UA Nodesets für ein Automatisierungssystem einzulesen, wobei OPC UA Instanzen des OPC UA Instanznodesets Komponenten des Automatisierungsprozesses des Automatisierungssystems beschreiben und jeweils einen OPC UA Objekttyp des OPC UA Nodesets aufweisen, und
auf Basis der OPC UA Instanzen des eingelesen OPC UA Instanznodesets den OPC UA Instanzen entsprechende PLC Objekte zu generieren.

Hierdurch wird der technische Vorteil erreicht, dass eine Entwicklungsumgebung bereitgestellt werden kann, die eingerichtet ist, das erfindungsgemäße Verfahren zum Verknüpfen von OPC UA Instanzen und PLC Objekten auszuführen.

Die Entwicklungsumgebung umfasst ein erstes Entwicklungsmodul und ein zweites Entwicklungsmodul. Das erste Entwicklungsmodul ist eingerichtet, den Leseschritt des erfindungsgemäßen Verfahrens auszuführen und ein OPC UA Nodeset einer OPC UA Companion Specification einzulesen. Darüber hinaus ist das erste Entwicklungsmodul eingerichtet, den Objekttypgenerierungsschritt auszuführen und auf Basis der OPC UA Objekttypen des eingelesenen OPC UA Nodesets entsprechende PLC Objekttypen zu generieren. PLC Objekttypen können somit automatisch durch Ausführen des ersten Entwicklungsmoduls auf Basis der OPC UA Objekttypen der jeweiligen Companion Specification generiert werden. Hierdurch ist eine einfache Handhabung und eine problemlose Generierung der PLC Objekttypen gewährleistet.

Ferner ist das erste Entwicklungsmodul eingerichtet, ein OPC UA Instanznodeset von OPC UA Instanzen der OPC UA Objekttypen einzulesen und auf Basis der OPC UA Instanzen entsprechende PLC Objekte zu generieren. Hierdurch ist eine automatische Generierung von PLC Objekten erreicht, die PLC Objekttypen aufweisen, die OPC UA Objekttypen entsprechender OPC UA Instanzen entsprechen, sodass die generierten PLC Objekte problemlos mit entsprechenden OPC UA Instanzen verknüpfbar sind. Hierdurch wird ferner eine automatische und problemlos durchzuführende Verknüpfung von OPC UA Instanzen und entsprechenden PLC Objekten ermöglicht.

Nach einer Ausführungsform sind das OPC UA Nodeset und das OPC UA Instanznodeset in einem Dokument zusammengefasst.

Nach einer Ausführungsform umfasst die Entwicklungsumgebung ferner:
ein zweites Entwicklungsmodul, wobei das zweite Entwicklungsmodul eingerichtet ist, wenigstens ein OPC UA Nodeset wenigstens einer OPC UA Companion Specification einzulesen,
die OPC UA Objekttypen des eingelesen OPC UA Nodesets in einer graphischen Umgebung darzustellen, und
einem Nutzer in der graphischen Umgebung zu ermöglichen, aus den OPC UA Objekttypen für ein Automatisierungssystem OPC UA Instanzen zu generieren und ein OPC UA Instanznodeset zu erzeugen, wobei OPC UA Instanzen des OPC UA Instanznodesets Komponenten eines Automatisierungsprozesses des Automatisierungssystems beschreiben und jeweils einen OPC UA Objekttyp des OPC UA Nodesets aufweisen, und
OPC UA Instanzen des OPC UA Instanznodesets und PLC Objekte eines PLC Codes eines Steuerprogramms des Automatisierungssystems in der graphischen Umgebung darzustellen und einem Nutzer zu ermöglichen, in der graphischen Umgebung eine Verknüpfung zwischen OPC UA Instanzen des OPC UA Istanznodesets und PLC Objekten des PLC Codes herzustellen, wobei durch eine Verknüpfung einer OPC UA Instanz des OPC UA Instanznodesets mit einem PLC Objekt des PLC Codes bewirkt ist, dass Information des PLC Objekts über ein Ausführen der OPC UA Instanz zugänglich ist.

Hierdurch wird der technische Vorteil erreicht, dass eine Entwicklungsumgebung bereitgestellt wird, die eingerichtet ist, das erfindungsgemäße Verfahren zum Verknüpfen von OPC UA Instanzen und PLC Objekten auszuführen.

Das zweite Entwicklungsmodul ist eingerichtet, ein OPC UA Nodeset einer OPC UA Companion Specification einzulesen, die OPC UA Objekttypen des eingelesenen OPC UA Nodesets in einer grafischen Umgebung darzustellen und einem Anwender in der grafischen Umgebung zu ermöglichen, auf Basis der OPC UA Objekttypen für ein bestimmtes Automatisierungssystem OPC UA Instanzen zu generieren. Der Anwender kann hierbei aus einer Liste der OPC UA Objekttypen entsprechende OPC UA Objekttypen auswählen und mittels gegebener Eingabemöglichkeiten Zahlenwerte von zu instanziierenden Komponenten eines Automatisierungsprozesses des Automatisierungssystems in die ausgewählten OPC UA Objekttypen eingeben und diese somit instanziieren. Hierdurch wird eine einfach zu handhabende Entwicklungsumgebung zum Durchführen einer Instanziierung von OPC UA Instanzen bereitgestellt.

Das zweite Entwicklungsmodul ist ferner eingerichtet, den Verknüpfungsschritt durchzuführen und OPC UA Instanzen und PLC Objekte miteinander zu verknüpfen. Hierzu ist das zweite Entwicklungsmodul eingerichtet, OPC UA Instanzen und PLC Objekte in einer grafischen Umgebung darzustellen und einem Anwender in der grafischen Umgebung zu ermöglichen, eine Verknüpfung zwischen OPC UA Instanzen und PLC Objekten herzustellen. In der grafischen Umgebung des zweiten Entwicklungsmoduls ist einem Anwender somit eine einfach durchzuführende Verknüpfung von OPC UA Instanzen und PLC Objekten ermöglicht, bei der zu verknüpfende OPC UA Instanzen und PLC Objekte aus entsprechenden Listen auswählbar und durch entsprechende Eingabemöglichkeiten Verknüpfungen zwischen ausgewählten OPC UA
Instanzen und PLC Objekten erzeugbar sind. Hierdurch ist eine einfach durchzuführende Verknüpfung von OPC UA Instanzen und PLC Objekten gewährleistet.

Nach einer Ausführungsform ist die Entwicklungsumgebung ferner eingerichtet, XML-Dokumente, insbesondere PLCopenXML-Dokumente entsprechend der Spezifikation des PLCopen Konsortiums zu generieren, die generierte PLC Objekttypen und/oder PLC Objekte umfassen.

Hierdurch wird der technische Vorteil erreicht, dass eine breit einsetzbare Entwicklungsumgebung bereitgestellt werden kann. Durch das Generieren von PLCopenXML-Dokumenten, in dem generierte PLC Objekttypen und/oder PLC Objekte zusammengefasst sind, können die generierten PLC Objekttypen und/oder generierten PLC Objekte auf beliebigen anderen Entwicklungsumgebungen weiterverarbeitet und im entsprechenden PLC Code eines Steuerprogramms eingebunden werden. Hierdurch wird ein hoher Grad an Interkompatibilität erreicht, und ein weiterer Schritt in Richtung Standardisierung von Prozessen innerhalb der Automatisierungstechnik erreicht.

Die Erfindung wird anhand der beigefügten Figuren näher erläutert. Hierbei zeigen:
- Fig. 1: ein Flussdiagramm eines Verfahrens zum Verknüpfen von Objekten des Datenkommunikationsstandards Open Platform Communication Unified Architecture OPC UA mit Objekten eines PLC Codes eines Steuerprogramms einer Steuereinheit eines Automatisierungssystems gemäß einer Ausführungsform;
- Fig. 2: ein Flussdiagramm des Verfahrens zum Verknüpfen von Objekten des Datenkommunikationsstandards Open Platform Communication Unified Architecture OPC UA mit Objekten eines PLC Codes eines Steuerprogramms einer Steuereinheit eines Automatisierungssystems gemäß einer weiteren Ausführungsform;
- Fig. 3: ein Flussdiagramm des Verfahrens zum Verknüpfen von Objekten des Datenkommunikationsstandards Open Platform Communication Unified Architecture OPC UA mit Objekten eines PLC Codes eines Steuerprogramms einer Steuereinheit eines Automatisierungssystems gemäß einer weiteren Ausführungsform;
- Fig. 4: ein Flussdiagramm des Verfahrens zum Verknüpfen von Objekten des Datenkommunikationsstandards Open Platform Communication Unified Architecture OPC UA mit Objekten eines PLC Codes eines Steuerprogramms einer Steuereinheit eines Automatisierungssystems gemäß einer weiteren Ausführungsform; und
- Fig. 5: eine schematische Darstellung eines Automatisierungssystems einer Entwicklungsumgebung zum Ausführen des Verfahrens zum Verknüpfen von OPC UA Knoten mit Objekten eines PLC Codes einer Steuereinheit des Automatisierungssystems gemäß einer Ausführungsform.

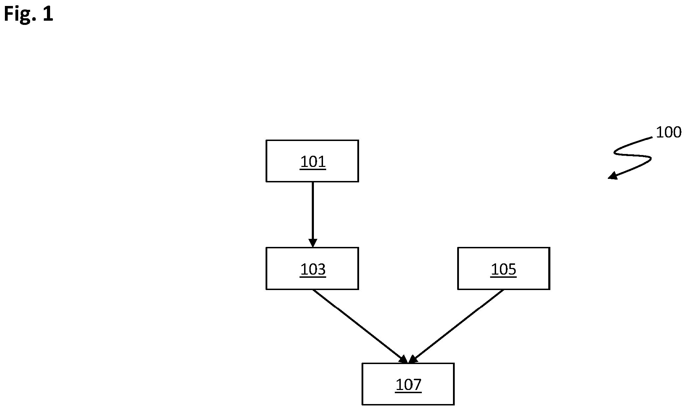

Fig. 1 zeigt ein Flussdiagramm eines Verfahrens 100 zum Verknüpfen von Objekten des Datenkommunikationsstandards Open Platform Communication Unified Architecture OPC UA mit Objekten eines PLC Codes eines Steuerprogramms einer Steuereinheit eines Automatisierungssystems gemäß einer Ausführungsform.

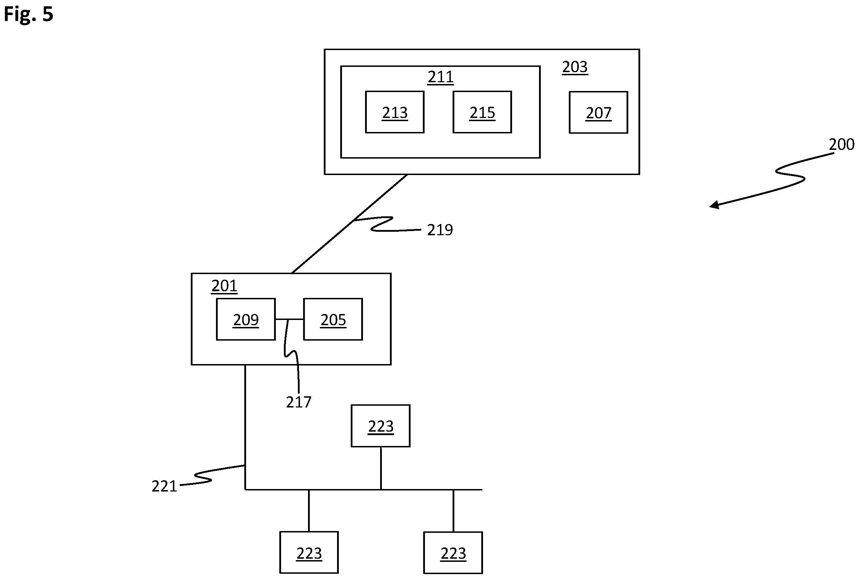

Das Verfahren 100 kann auf ein Automatisierungssystem vergleichbar zu dem in Fig. 5 dargestellten Automatisierungssystem bezogen werden.

Gemäß der Ausführungsform in Fig. 1 umfasst das Verfahren 100 die folgenden Schritte: Einlesen eines OPC UA Nodesets einer Companion Specification in einem Leseschritt 101, wobei das OPC UA Nodeset eine Definition von OPC UA Objekttypen eines in der Companion Specification definierten OPC UA Informationsmodells umfasst;
Generieren von OPC UA Instanzen der OPC UA Objekttypen des OPC UA Nodesets für das Automatisierungssystem und Zusammenfassen der OPC UA Instanzen in einem OPC UA Instanznodeset in einem Instanziierungsschritt 103, wobei generierte Instanzen des OPC UA Instanznodesets Komponenten eines Automatisierungsprozesses des Automatisierungssystems beschreiben und jeweils einen OPC UA Objekttyp des OPC UA Nodesets aufweisen;
Generieren von PLC Objekten in einem PLC Code eines Steuerprogramms des Automatisierungssystems in einem Objektgenerierungsschritt 105, wobei PLC Objekte im PLC Code Komponenten des Automatisierungssystems beschreiben und jeweils einen PLC Objekttyp aufweisen; und
Verknüpfen der OPC UA Instanzen des OPC UA Instanznodesets mit PLC Objekten des PLC Codes des Steuerprogramms in einem Verknüpfungsschritt 107, wobei jede OPC UA Instanz mit genau dem PLC Objekt verknüpft wird, das im Steuerprogramm die gleiche Komponente des Automatisierungsprozesses des Automatisierungssystems beschreibt, und wobei durch eine Verknüpfung einer OPC UA Instanz des OPC UA Instanznodesets mit einem PLC Objekt des PLC Codes bewirkt ist, dass Information des PLC Objekts über ein Ausführen der OPC UA Instanz zugänglich ist.

Das erfindungsgemäße Verfahren 100 dient zur Verknüpfung von OPC UA Objekten bzw. OPC UA Instanzen des OPC UA Kommunikationsstandards und PLC Objekten eines PLC Codes eines Steuerprogramms eines Automatisierungssystems. Um den OPC UA Kommunikationsstandard für eine Kommunikation zwischen Einheiten eines Automatisierungssystems, beispielsweise zwischen Rechnern der Leitebene und einer Steuereinheit des Automatisierungssystems, oder zum Bereitstellen von Information in einem durch den OPC UA Kommunikationsstandard standardisierten Informationsmodell ist eine Verknüpfung zwischen Objekten des OPC UA Kommunikationsstandards und Objekten des PLC Codes eines Steuerprogramms des Automatisierungssystems notwendig. Durch die Verknüpfung ist gewährleistet, dass bei Aufrufen von OPC UA Objekten, die in einem Adressraum eines OPC UA Servers angeordnet sind, entsprechende Information bezüglich der durch die OPC UA Objekte dargestellten Komponenten eines Automatisierungsprozesses des Automatisierungssystems zugänglich ist.

Im PLC Code des Steuerprogramms sind Komponenten des zu steuernden Automatisierungsprozesses durch entsprechende PLC Objekte dargestellt und Information bezüglich der entsprechenden Komponenten des Automatisierungsprozesses ist in den entsprechenden PLC Objekten des PLC Codes abgelegt. Um über ein Ausführen bzw. Aufrufen von OPC UA Objekten durch eine entsprechende Anfrage eines OPC UA Clients an den OPC UA Server einen Zugriff auf die Information einer entsprechenden Komponente eines Automatisierungsprozesses ermöglichen zu können, bedarf es daher einer Verknüpfung zwischen den im Adressraum des OPC UA Servers angeordneten OPC UA Objekten und den entsprechenden PLC Objekten des PLC Codes des Steuerprogramms, in denen die Information bezüglich der entsprechenden Komponenten des Automatisierungsprozesses abgelegt ist. Erst durch eine entsprechende Verknüpfung zwischen OPC UA Objekten und entsprechenden PLC Objekten ist eine Darstellung der Information der PLC Objekte gemäß dem durch den OPC UA Kommunikationsstandard definierten Informationsmodell und eine entsprechende Datenkommunikation auf Basis des OPC UA Kommunikationsstandards ermöglicht.

Um eine Verknüpfung zwischen OPC UA Objekten und PLC Objekten eines PLC Codes eines Steuerprogramms eines zu steuernden Automatisierungssystems zu ermöglichen, wird in dem Leseschritt 101 ein Nodeset einer Companion Specification eingelesen. Ein OPC UA Nodeset umfasst eine Definition von OPC UA Objekttypen eines in der Companion Specification definierten OPC UA Informationsmodells. Die Objekttypen des OPC UA Nodesets definieren Datenstrukturen für Objekte, Funktionen, Variablen, Dateneinheiten oder Referenzen, mittels denen gemäß dem definierten Informationsmodell Daten strukturiert und Information dargestellt wird.

Darauffolgend werden in dem Instanziierungsschritt 103 auf Basis der OPC UA Objekttypen des OPC UA Nodesets für ein bestimmtes Automatisierungssystem OPC UA Instanzen generiert und die generierten OPC UA Instanzen in einem OPC UA Instanznodeset zusammengefasst. Eine OPC UA Instanz basiert hierbei auf einem bestimmten OPC UA Objekttyp des eingelesenen OPC UA Nodesets und beschreibt eine Komponente eines durch das Automatisierungssystem zu steuernden Automatisierungsprozesses.

Eine Komponente eines Automatisierungsprozesses kann hierbei ein Gerät des Automatisierungssystems, ein Teilprozess des Automatisierungsprozesses, ein Messwert oder eine beliebige andere Größe sein, die eine quantitative Aussage bezüglich eines Aspektes des zu steuernden Automatisierungsprozesses zulässt.

Beispielsweise kann eine Komponente ein Sensor des Automatisierungssystems sein und in der entsprechenden OPC UA Instanz verschiedene den jeweiligen Sensor beschreibende Größen, wie beispielsweise der Messwert des Sensors, ein Messbereich des Sensors, sowie weitere Funktionen des Sensors umfassen. Jede generierte OPC UA Instanz weist dabei einen im OPC UA Nodeset einer bestimmten Companion Specification für eine derartige Komponente eines Automatisierungsprozesses definierten OPC UA Objekttyp auf. Der OPC UA Objekttyp definiert eine Datenstruktur, in der die Information der jeweiligen Komponente, bzw. des dazugehörigen PLC Objekts, dargestellt wird.

In dem Objektgenerierungsschritt 105 werden PLC Objekte in einem PLC Code des Steuerprogramms des Automatisierungssystems generiert. Die PLC Objekte sind instanziierte Datenstrukturen des PLC Codes und beschreiben jeweils eine Komponente des zu steuernden Automatisierungsprozesses. Die PLC Objekte weisen jeweils einen PLC Objekttyp auf, der die Datenstruktur des PLC Objekts innerhalb des PLC Codes definiert.

PLC Objekttypen können Typen von Objekten im Sinne objektorientierter Programmierung, Typen von Variablen, Typen von Dateneinheiten oder Typen von Referenzen sein.

Der Objektgenerierungsschritt 105 kann sowohl zeitlich vor, zeitlich nach oder zeitgleich zu dem Instanziierungsschritt 103 durchgeführt werden. Der Objektgenerierungsschritt 105 kann im Zuge einer Programmierung des PLC Codes des Steuerprogramms durchgeführt werden. In der Ausführungsform in Fig. 1 betrifft das erfindungsgemäße Verfahren 100 den Fall, dass ein PLC Code eines Steuerprogramms bereits vor Instanziierung der OPC UA Objekttypen der Companion Specification durchgeführt wird, und somit eine Programmierung des PLC Codes des Steuerprogramms voraussichtlich unter Berücksichtigung des in der Companion Specification definierten Informationsmodells durchgeführt worden ist.

Alternativ kann das Verfahren 100 den Fall behandeln, dass eine Programmierung des PLC Codes des Steuerprogramms nach Durchführen des Instanziierungsschritts 103 bzw. zeitgleich zu diesem durchgeführt wird, sodass bei der Generierung des PLC Codes des Steuerprogramms das durch die Companion Specification definierte Informationsmodell berücksichtigt wird.

Nach Generierung der OPC UA Instanzen im Instanziierungsschritt 103 und der PLC Objekte im Objektgenerierungsschritt 105 werden die OPC UA Instanzen des OPC UA Instanznodesets mit den PLC Objekten des PLC Codes in dem Verknüpfungsschritt 107 verknüpft. Hierbei wird jede OPC UA Instanz mit genau dem PLC Objekt verknüpft, das die gleiche Komponente des Automatisierungsprozesses beschreibt. Durch die hergestellte Verknüpfung zwischen OPC UA Instanzen und PLC Objekten ist somit gewährleistet, dass durch Ausführen bzw. Aufrufen der im Adressraum des OPC UA Servers angeordneten OPC UA Instanzen durch einen OPC UA Client die Information des jeweils mit der aufgerufenen bzw. ausgeführten OPC UA Instanz verknüpften PLC Objekt für den OPC UA Client zugänglich ist.

Der OPC UA Client kann somit durch Aufrufen oder Ausführen einer OPC UA Instanz Information des mit dieser verknüpften PLC Objekts einlesen bzw. durch einen entsprechenden Schreibbefehl modifizieren. Durch die Verknüpfung von OPC UA Instanzen und entsprechenden PLC Objekten eines PLC Codes eines Steuerprogramms eines Automatisierungssystems ist ein Anwender in der Lage, über den OPC UA Kommunikationsstandard auf Information bezüglich eines durch das Automatisierungssystem gesteuerten Automatisierungsprozesses zuzugreifen. Die über den OPC UA Kommunikationsstandard bereitgestellte Information ist hierbei in standardisierter Form gemäß eines definierten Informationsmodells dargestellt und kann von beliebigen Anwendern für beliebige Prozesse konsumiert werden.

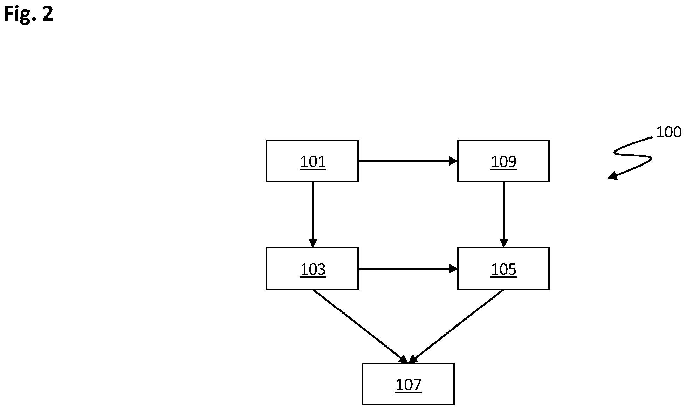

Fig. 2 zeigt ein Flussdiagramm des Verfahrens 100 zum Verknüpfen von Objekten des Datenkommunikationsstandards Open Platform Communication Unified Architecture OPC UA mit Objekten eines PLC Codes eines Steuerprogramms einer Steuereinheit eines Automatisierungssystems gemäß einer weiteren Ausführungsform.

Die Ausführungsform in Fig. 2 basiert auf der Ausführungsform in Fig. 1 und umfasst alle Verfahrensschritte der Ausführungsform in Fig. 1. Diese Schritte werden im Folgenden nicht erneut erläutert.

In einem Objekttypgenerierungsschritt 109 werden auf Basis der OPC UA Objekttypen des OPC UA Nodesets, die im Leseschritt 101 eingelesen werden, entsprechende PLC Objekttypen des PLC Codes des Steuerprogramms generiert. Die generierten PLC Objekttypen weisen Datenstrukturen auf, die den Datenstrukturen der OPC UA Objekttypen des OPC UA Nodesets entsprechen. Die generierten PLC Objekttypen definieren die Datenstruktur von Objekten im Sinne einer objektorientierten Programmierung, von Variablen, von Dateneinheiten oder von Referenztypen im PLC Code und dienen zur Erzeugung von Objekten, Variablen, Dateneinheiten und Referenzen in einer folgenden Programmierung des PLC Codes des Steuerprogramms.

Durch die Generierung der PLC Objekttypen auf Basis der eingelesenen OPC UA Objekttypen des OPC UA Nodesets der Companion Specification kann die Programmierung des PLC Codes des Steuerprogramms mit Berücksichtigung der Datenstruktur der OPC UA Objekte, die in der Companion Specification definiert sind, durchgeführt werden. Somit kann der PLC Code des Steuerprogramms von Beginn an derart strukturiert werden, dass eine spätere Verknüpfung mit OPC UA Objekten bzw. OPC UA Instanzen, die für eine standardisierte Datenkommunikation auf Basis des OPC UA Kommunikationsstandards bzw. für eine standardisierte Darstellung von Information auf Basis des in der jeweiligen Companion Specification definierten Informationsmodells benötigt wird.

Die im Objekttypgenerierungsschritt 109 generierten PLC Objekttypen können in einer entsprechenden Bibliothek angeordnet werden, die bei einer späteren Programmierung des PLC Codes des Steuerprogramms zur Definition der Datenstrukturen der einzelnen PLC Objekte verwendet werden kann.

Zusätzlich zu den auf Basis der OPC UA Objekttypen des OPC UA Nodesets generierten PLC Objekttypen kann in der generierten Bibliothek bzw. in den generierten Bibliotheken in der jeweiligen Companion Specification enthaltene Businesslogik gespeichert werden. Die in der Companion Specification definierte Businesslogik kann beispielsweise detaillierte Beschreibungen der in der Companion Specification definierten Objekte und Vorgänge bzw. Prozesse enthalten. Darüber hinaus kann die Businesslogik verschiedene Zusammenhänge einzelner in der Companion Specification definierter Objekte beschreiben. Im Allgemeinen kann die Businesslogik jegliche Information, die nicht auf ein bestimmtes Automatisierungssystem beschränkt ist, sondern allgemeine Prozesse bzw. Relationen, die in der durch die Companion Specification beschriebenen Branche von Bedeutung sind, umfassen. Derartige in der Companion Specification definierten Businesslogik kann in dem Leseschritt 101 eingelesen werden und in dem Objekttypgenerierungsschritt 109 im entsprechenden PLC Code übertragen werden und in den generierten Bibliotheken abgelegt werden, sodass die in der Businesslogik enthaltene Information bei einer späteren Programmierung des PLC Codes des Steuerprogramms berücksichtigt werden kann.

Nach Generierung der PLC Objekttypen im Objekttypgenerierungsschritt 109 werden in dem Objektgenerierungsschritt 105 PLC Objekte des PLC Codes des Steuerprogramms generiert. In der Ausführungsform in Fig. 2 werden die PLC Objekte auf Basis der im Objekttypgenerierungsschritt 109 generierten PLC Objekttypen generiert. Somit ist vorausgesetzt, dass die generierten PLC Objekte Datenstrukturen aufweisen, die den PLC Objekttypen entsprechen, die wiederum auf Basis der im OPC UA Nodeset definierten OPC UA Objekttypen generiert wurden. Somit ist gewährleistet, dass die generierten PLC Objekte Datenstrukturen aufweisen, die den im Instanziierungsschritt 103 generierten OPC UA Instanzen entsprechen.

In der Ausführungsform in Fig. 2 werden zur Generierung der PLC Objekte, die einer Instanziierung der PLC Objekttypen zur Beschreibung einzelner Komponenten des durch das Automatisierungssystem gesteuerten Automatisierungsprozesses entspricht, die im Instanziierungsschritt 103 generierten OPC UA Instanzen herangezogen. Die OPC UA Instanzen dienen somit als Grundlage für die zu generierenden PLC Objekte, sodass zur Generierung der PLC Objekte im PLC Code des Steuerprogramms lediglich die jeweils bereits in den OPC UA Instanzen gespeicherte Information bezüglich der im PLC Code darzustellenden Komponenten des Automatisierungsprozesses gemäß dem im Objekttypgenerierungsschritt 109 generierten PLC Objekttypen darzustellen ist. Eine umständliche Instanziierung der einzelnen PLC Objekttypen zur Beschreibung der jeweiligen Komponenten des Automatisierungsprozesses kann somit vermieden werden.

Die auf diese Weise generierten PLC Objekttypen beinhalten die Information der OPC UA Instanzen und weisen jeweils einen der generierten PLC Objekttypen auf. Ein derart generiertes PLC Objekt beschreibt eine Komponente des zu steuernden Automatisierungsprozesses innerhalb des PLC Codes des Steuerprogramms, die im OPC UA Instanznodeset durch eine entsprechende OPC UA Instanz beschrieben ist.

In der Ausführungsform in Fig. 2 ist der Fall beschrieben, dass die Programmierung des PLC Codes des Steuerprogramms auf Basis der zuvor eingelesenen Companion Specification durchgeführt wird. Hiermit können die der Companion Specification definierten Anforderungen an eine standardisierte Datenkommunikation auf Basis des OPC UA Kommunikationsstandards direkt in die Programmierung des PLC Codes des Steuerprogramms einfließen, so dass eine spätere umständliche Verknüpfung von OPC UA Instanzen und PLC Objekten entfällt. Durch die Generierung der PLC Objekte auf Basis der PLC Objekttypen, die wiederum auf Basis der in der Companion Specification definierten OPC UA Objekttypen generiert wurden, und auf Basis der im Instanziierungsschritt 103 generierten OPC UA Instanzen weisen die generierten PLC Objekte Datenstrukturen auf, die kompatibel zu den Datenstrukturen der generierten OPC UA Instanzen sind, sodass eine Verknüpfung zwischen den generierten OPC UA Instanzen und den generierten PLC Objekten des PLC Codes mit geringem Programmieraufwand beziehungsweise ohne Programmieraufwand automatisch durch den OPC UA Server durchführbar ist.

Im Verknüpfungsschritt 107 können somit die generierten OPC UA Instanzen und die entsprechenden PLC Objekte miteinander verknüpft werden, indem OPC UA Instanzen und PLC Objekte als zusammenhängende Einheiten verknüpft werden. Pro zu verknüpfendem Paar von OPC UA Instanz und PLC Objekt wird somit lediglich eine Verknüpfung benötigt und explizite Verknüpfungen von Untereinheiten der OPC UA Instanzen bzw. Untereinheiten der PLC Objekte sind nicht notwendig. Da die zu verknüpfenden OPC UA Instanzen und die entsprechenden PLC Objekte identische Datenstrukturen aufweisen, ist eine einheitliche Verknüpfung zwischen der OPC UA Instanz als zusammenhängende Einheit und dem PLC Objekt ebenfalls als zusammenhängende Einheit ausreichend, um einzelne Untereinheiten der OPC UA Instanz mit entsprechenden Untereinheiten des PLC Objekts zu verknüpfen. Wird beispielsweise eine Untereinheit einer OPC UA Instanz ausgeführt bzw. aufgerufen, wird über die entsprechende Verknüpfung an das jeweilige PLC Objekt verwiesen, und durch die identische Datenstruktur des PLC Objekts ist die Information einer entsprechenden Untereinheit des PLC Objekts zugänglich, ohne dass eine explizite Verknüpfung der einzelnen Untereinheiten der OPC UA Instanz mit entsprechenden Untereinheiten des PLC Objekts benötigt wird.

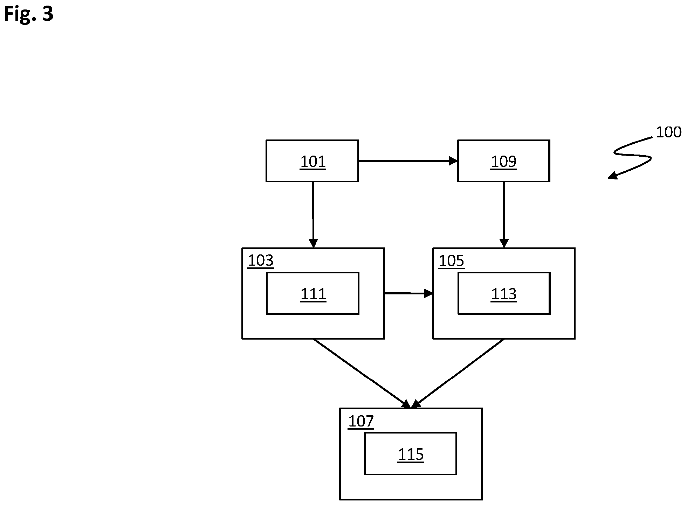

Fig. 3 zeigt ein Flussdiagramm des Verfahrens 100 zum Verknüpfen von Objekten des Datenkommunikationsstandards Open Platform Communication Unified Architecture OPC UA mit Objekten eines PLC Codes eines Steuerprogramms einer Steuereinheit eines Automatisierungssystems gemäß einer weiteren Ausführungsform.

Die in Fig. 3 gezeigte Ausführungsform basiert auf der Ausführungsform in Fig. 2 und umfasst alle Verfahrensschritte der Ausführungsform in Fig. 2. Diese Schritte werden im Folgenden nicht erneut erläutert.

Gemäß der Ausführungsform in Fig. 3 umfasst der Instanziierungsschritt 103 einen ersten Markierungsschritt 111. Im ersten Markierungsschritt 111 werden die im Instanziierungsschritt 103 generierten OPC UA Instanzen mit ersten Markierungsattributen versehen.

Der Objektgenerierungsschritt 105 umfasst einen zweiten Markierungsschritt 113. Im zweiten Markierungsschritt 113 werden die im Objektgenerierungsschritt 105 generierten PLC Objekte mit zweiten Markierungsattributen versehen.

Die ersten und zweiten Markierungsattribute können beliebige Markierungen sein, mit denen die markierten OPC UA Instanzen bzw. die markierten PLC Objekte eindeutig identifizierbar sind. Jede der generierten OPC UA Instanzen kann mit einem individuellen ersten Markierungsattribut versehen werden, sodass jede der generierten OPC UA Instanzen anhand des ersten Markierungsattributs eindeutig identifizierbar ist. Darüber hinaus kann jedes der generierten PLC Objekte mit einem zweiten Markierungsattribut versehen werden, sodass jedes generierte PLC Objekt anhand des zweiten Markierungsattributs eindeutig identifizierbar ist.

Die ersten und zweiten Markierungsattribute können dabei derart ausgewählt werden, dass eine eindeutige Zuordnung zwischen einzelnen OPC UA Instanzen und entsprechenden PLC Objekten ermöglicht ist. Beispielsweise können eine OPC UA Instanz und ein PLC Objekt, das der OPC UA Instanz entspricht und mit der OPC UA Instanz im Verknüpfungsschritt 107 zu verknüpfen ist, mit dem gleichen Markierungsattribut versehen werden, sodass über das identische Markierungsattribut eine eindeutige Zuordnung zwischen der OPC UA Instanz und dem entsprechenden PLC Objekt ermöglicht ist.

Alternativ können ausschließlich die OPC UA Instanzen mit ersten Markierungsattributen versehen werden, während die PLC Objekte keine Markierung erfahren. Beispielsweise kann das erste Markierungsattribut eine Speicherstelle des jeweils mit der OPC UA Instanz zu verknüpfenden PLC Objekts sein, sodass anhand der in der OPC UA Instanz gespeicherten oder mit dieser assoziierten Speicheradresse des jeweils mit der OPC UA Instanz zu verknüpfenden PLC Objekts eindeutig der OPC UA Instanz zugeordnet ist. Alternativ kann eine OPC UA Instanz mit einer entsprechenden Referenz auf das der jeweiligen OPC UA Instanz zuzuordnenden PLC Objekts als Markierung versehen werden.

Alternativ kann ausschließliches jedes PLC Objekt mit einem zweiten Markierungsattribut versehen werden, während die OPC UA Instanzen des OPC UA Instanznodesets unmarkiert bleiben. Beispielsweise kann jedes PLC Objekt mit einer Referenz auf die dem jeweiligen PLC Objekt zuzuordnenden OPC UA Instanz als Markierung versehen sein.

Der Verknüpfungsschritt 107 umfasst einen Zuordnungsschritt 115. Im Zuordnungsschritt 115 wird eine Zuordnung zwischen OPC UA Instanzen und PLC Objekten auf Basis der ersten Markierungsattribute der OPC UA Instanzen und/oder der zweiten Markierungsattribute der PLC Objekte durchgeführt. Eine Zuordnung wird dabei für solche OPC UA Instanzen und solche PLC Objekte vorgenommen, die im Verknüpfungsschritt 107 miteinander zu verknüpfen sind, sodass über ein Aufrufen oder Ausführen von OPC UA Instanzen die Information der entsprechenden PLC Objekte zugänglich gemacht wird.

In der Ausführungsform in Fig. 3, die vorsieht, dass die PLC Objekte im Objektgenerierungsschritt 105 auf Basis der OPC UA Instanzen generiert werden, werden PLC Objekte den OPC UA Instanzen zugeordnet, aus denen die PLC Objekte im Objektgenerierungsschritt 105 daraus generiert worden sind. Die Zuordnung zwischen OPC UA Instanzen und PLC Objekten wird somit für die OPC UA Instanzen und PLC Objekte vorgenommen, die identische Komponenten des Automatisierungsprozesses beschreiben und identische Objekttypen aufweisen. Anhand der Zuordnung zwischen den generierten OPC UA Instanzen und den PLC Objekten ist eine problemlose Verknüpfung im Verknüpfungsschritt 107 ermöglicht. Beispielsweise kann eine Verknüpfung darüber realisiert sein, dass OPC UA Instanzen und entsprechende PLC Objekte mit Referenzen auf die jeweils zugeordneten PLC Objekte bzw. OPC UA Instanzen markiert sind, und zur Verknüpfung ein Kommunikationsprotokoll verwendet wird, mittels dem anhand der als Markierung versehenen Referenzen auf die jeweils zugeordneten OPC UA Instanzen bzw. PLC Objekte ein entsprechender Informationstransfer ermöglicht ist, so dass über das Ausführen einer bestimmten OPC UA Instanz die Information des dieser OPC UA Instanz zugeordneten PLC Objekts über das entsprechende Kommunikationsprotokoll zugänglich gemacht wird, indem über das Kommunikationsprotokoll Daten zwischen den jeweils referenzierten OPC UA Instanzen und PLC Objekten ausgetauscht wird.

Alternativ können die OPC UA Instanzen des OPC UA Nodesets und die generierten PLC Objekte auf eine andere Weise miteinander verknüpft sein, solange über die Verknüpfung gewährleistet ist, dass durch ein Ausführen bzw. Aufrufen einer OPC UA Instanz die Information eines der OPC UA Instanz zugeordneten PLC Objekts zugänglich gemacht wird.

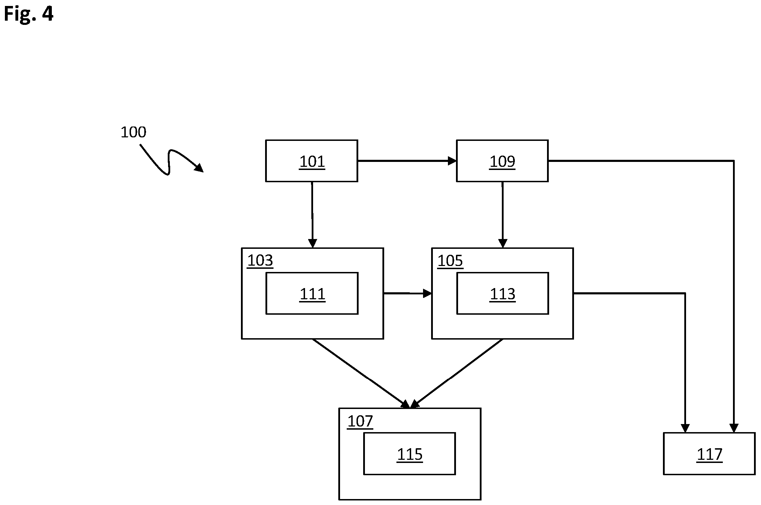

Fig. 4 zeigt ein Flussdiagramm des Verfahrens 100 zum Verknüpfen von Objekten des Datenkommunikationsstandards Open Platform Communication Unified Architecture OPC UA mit Objekten eines PLC Codes eines Steuerprogramms einer Steuereinheit ines Automatisierungssystems gemäß einer weiteren Ausführungsform.

Die Ausführungsform von Fig. 4 basiert auf der Ausführungsform in Fig. 3 und umfasst alle Schritte der Ausführungsform in Fig. 3. Diese Verfahrensschritte werden im Folgenden nicht erneut diskutiert.

Nach Generierung der PLC Objekttypen im Objekttypgenerierungsschritt 109 und der Generierung von PLC Objekten im Objektgenerierungsschritt 105 wird in einem Dokumentgenerierungsschritt 117 ein XML-Dokument entsprechend Vorgaben des PLCopen Konsortiums, also ein PLCOpenXML-Dokument generiert, indem die generierten PLC Objekttypen und/oder die generierten PLC Objekte gespeichert sind. Das generierte bzw. die generierten PLCOpenXML-Dokumente können in folgenden Programmierschritten in einer beliebigen Entwicklungsumgebung eingelesen werden, sodass nach Generierung der PLC Objekttypen bzw. der Generierung der PLC Objekte eine Programmierung des PLC Codes des Steuerprogramms einer beliebigen Entwicklungsumgebung fortgesetzt bzw. beendet werden kann. Darüber hinaus können die generierten PLC Objekttype des PLCOpenXML-Dokuments für die Programmierung weiterer Steuerprogramme für andere Automatisierungssysteme verwendet werden. Die Speicherung der generierten PLC Objekttypen und/oder der generierten PLC Objekte in entsprechenden PLCOpenXML-Dokumenten ermöglicht eine standardisierte und plattformunabhängige Programmierung eines PLC Codes, indem generierte PLCOpenXML-Dokumente durch beliebige Programmierumgebungen eingelesen und bearbeitet werden können.

Alternativ kann im erfindungsgemäßen Verfahren 100 im Leseschritt 101 eine Mehrzahl von Nodesets unterschiedlicher Companion Specifications eingelesen werden. Analog den oben beschriebenen Verfahrensschritten kann jedes eingelesene Nodeset berücksichtigt werden, um entsprechende OPC UA Instanzen zu erzeugen und mit entsprechenden PLC Objekten zu verknüpfen. Die Berücksichtigung einer Mehrzahl von Companion Specifiaction kann durch das erfindungsgemäße Verfahren 100 nacheinander stattfinden, indem für jedes eingelesene Nodeset die oben beschriebenen Verfahrensschritte ausgeführt werden. Alternativ kann die Berücksichtigung verschiedener Companion Specifications simultan erfolgen, indem die OPC UA Objekttypen der Nodesets der verschiedenen Companion Specifications simultan gemäß den oben beschriebenen Verfahrensschritten berücksichtigt werden, um entsprechende OPC UA Instanzen zu generieren und mit entsprechenden PLC Objekten zu verknüpfen.

Alternativ kann durch das Verfahren 100 eine Mehrzahl von PLC Codes eines Steuerprogramms oder eine Mehrzahl von Steuerprogrammen eines Automatisierungssystems oder eine Mehrzahl von Automatisierungssystemen generiert werden.

Fig. 5 zeigt eine schematische Darstellung eines Automatisierungssystems 200 mit einer Entwicklungsumgebung 211 zum Ausführen des Verfahrens 100 zum Verknüpfen von Objekten des Datenkommunikationsstandards Open Platform Communication Unified Architecture OPC UA mit Objekten eines PLC Codes eines Steuerprogramms des Automatisierungssystems 200 gemäß der zuvor beschriebenen Ausführungsformen.

In Fig. 5 ist ein Automatisierungssystem 200 gezeigt, das eingerichtet ist, das erfindungsgemäße Verfahren 100 zur Verknüpfung von OPC UA Objekten und PLC Objekten auszuführen.

Das Automatisierungssystem 200 umfasst eine Steuereinheit 201, die über einen Datenbus 221 mit Feldgeräten 223 verbunden ist. Die Feldgeräte 223 können branchenübliche Aktoren und Sensoren sein, über die ein Automatisierungsprozess des Automatisierungssystems 200 gesteuert werden kann. Beispielhaft sind in Fig. 5 drei Feldgeräte 223 dargestellt. Es können jedoch ebenso mehr oder weniger Feldgeräte 223 in dem Automatisierungssystem 200 vorhanden sein.

Ferner umfasst das Automatisierungssystem 200 eine Datenverarbeitungseinheit 203, die über eine Datenverbindung 219 mit der Steuereinheit 201 verbunden ist. In der Datenverarbeitungseinheit 203 ist die Entwicklungsumgebung 211 zum Ausführen des erfindungsgemäßen Verfahrens 100 zum Verknüpfen von OPC UA Objekten und PLC Objekten angeordnet.

In der Steuereinheit 201 sind ein OPC UA Server 205 und eine PLC Applikation 209 integriert. Die PLC Applikation 209 kann beispielsweise einen PLC Code für ein Steuerprogramm der Steuereinheit 201 zum Steuern des Automatisierungsprozesses umfassen. Der OPC UA Server 205 und die PLC Applikation 209 sind über eine Datenkommunikationsschnittstelle 217 miteinander verbunden.

In der Datenverarbeitungseinheit 203 ist ein OPC UA Client 207 installiert. Zum Ausführen des erfindungsgemäßen Verfahrens 100 umfasst die Entwicklungsumgebung 211 ein erstes Entwicklungsmodul 213 und ein zweites Entwicklungsmodul 215.

Das erste Entwicklungsmodul 213 ist eingerichtet, den Leseschritt 101 auszuführen und ein OPC UA Nodeset einer OPC UA Companion Specification einzulesen. Ferner ist das erste Entwicklungsmodul 213 eingerichtet, den Objekttypgenerierungsschritt 109 auszuführen und auf Basis der eingelesenen OPC UA Objekttypen des OPC UA Nodesets entsprechende PLC Objekttypen zu generieren. Darüber hinaus ist das erste Entwicklungsmodul 213 eingerichtet, den Objektgenerierungsschritt 105 auszuführen und auf Basis eines generierten OPC UA Instanznodesets von Instanzen der OPC UA Objekttypen des OPC UA Nodesets für das Automatisierungssystem 200 entsprechende PLC Objekte des PLC Codes des Steuerprogramms der PLC Applikation 209 zu generieren.

Das zweite Entwicklungsmodul 215 ist ebenfalls eingerichtet, das OPC UA Nodeset einzulesen. Darüber hinaus umfasst das zweite Entwicklungsmodul 215 eine grafische Umgebung, in der das zweite Entwicklungsmodul 215 die OPC UA Objekttypen des eingelesenen OPC UA Nodesets einem Anwender darstellen kann. Darüber hinaus ist das zweite Entwicklungsmodul 215 eingerichtet, dem Anwender in der grafischen Umgebung zu ermöglichen, den Instanziierungsschritt 103 durchzuführen und die OPC UA Objekttypen des eingelesenen OPC UA Nodesets zu instanziieren und für die entsprechenden Komponenten des durch das Automatisierungssystem 200 gesteuerten Automatisierungsprozesses entsprechende OPC UA Instanzen zu generieren und diese in einem OPC UA Instanznodeset zusammenzufassen. Hierzu ist das zweite Entwicklungsmodul 215 eingerichtet, dem Nutzer in der grafischen Umgebung die eingelesenen OPC UA Objekttypen des OPC UA Nodesets der OPC UA Companion Specification in einer Liste bzw. Tabelle anzuzeigen und über entsprechende Eingabemöglichkeiten zu ermöglichen, aus den angezeigten OPC UA Objekttypen durch Eingabe entsprechender Zahlenwerte OPC UA Instanzen zu generieren.

Darüber hinaus ist das zweite Entwicklungsmodul 215 eingerichtet, dem Anwender in der grafischen Umgebung zu ermöglichen, den Verknüpfungsschritt 107 durchzuführen und eine Verknüpfung zwischen OPC UA Instanzen des OPC UA Instanznodeset und PLC Objekten des PLC Codes des Steuerprogramms miteinander zu generieren. Hierzu kann das zweite Entwicklungsmodul 215 eingerichtet sein, die generierten OPC UA Instanzen und die PLC Objekte in entsprechenden Listen bzw. Tabellen in der grafischen Umgebung anzuzeigen und über entsprechende Eingabemöglichkeiten dem Anwender zu ermöglichen, mittels der Vergabe entsprechender Zuordnungsattribute Zuordnungen zwischen den OPC UA Instanzen und PLC Objekten gemäß dem Zuordnungsschritt 115 vorzunehmen. Über die erstellten Zuordnungen zwischen jeweils miteinander zu verknüpfenden OPC UA Instanzen und PLC Objekten kann im Folgenden über die Durchführung des Verknüpfungsschritts 107 eine Verknüpfung der entsprechenden Objekte erreicht werden.

Darüber hinaus ist die Entwicklungsumgebung 211 eingerichtet, den PLC Code des Steuerprogramms auf Basis der generierten PLC Objekttypen und der generierten PLC Objekte zu vervollständigen, sodass auf Basis des PLC Codes ein Steuerprogramm über die Entwicklungsumgebung 211 generiert werden kann.

Der generierte PLC Code bzw. die generierten PLC Objekttypen und/oder die generierten PLC Objekte können in der PLC Applikation 209 auf der Steuereinheit 201 abgelegt bzw. gespeichert werden. Die OPC UA Objekttypen des OPC UA Nodesets der OPC UA Companion Specification und die generierten OPC UA Instanzen können in einem Adressraum des OPC UA Servers 205 angeordnet werden.

Die Verknüpfung zwischen den OPC UA Instanzen des Adressraums des OPC UA Servers 205 und der PLC Objekte in der PLC Applikation 209 kann beispielsweise darüber realisiert sein, dass die OPC UA Instanzen und die PLC Objekte mit entsprechenden Zuordnungsattributen, beispielsweise Referenzen auf die jeweils zuzuordnenden OPC UA Instanzen bzw. PLC Objekte, versehen sind, sodass mittels einer Anwendung eines entsprechenden Datenkommunikationsprotokolls bzw. der Datenkommunikationsschnittstelle 217 eine Zuordnung zwischen den jeweils einander referenzierenden OPC UA Instanzen und PLC Objekten erreicht ist.

Die Referenzen auf entsprechende PLC Objekte, über die OPC UA Instanzen entsprechenden PLC Objekten zugeordnet sind, können in den jeweiligen OPC UA Instanzen gespeichert sein. Alternativ können die jeweiligen Referenzen im OPC UA Instanznodeset gespeichert sein.

Durch die Verknüpfung zwischen den OPC UA Instanzen im Adressraum des OPC UA Servers 205 der Steuereinheit 201 und den PLC Objekten in der PLC Applikation 209 über die gegenseitige Referenzierung einander zugeordneter OPC UA Instanzen und PLC Objekte ist gewährleistet, dass bei einer Ausführung bzw. bei einem Aufruf einer OPC UA Instanz durch den OPC UA Client 207 im Adressraum des OPC Servers 205 die Information des mit der jeweils aufgerufenen bzw. ausgeführten OPC UA Instanz verknüpften PLC Objekts dem OPC UA Client 207 zugänglich ist.

Durch das Ausführen einer OPC UA Instanz im OPC UA Adressraum des OPC UA Servers 205 durch den OPC UA Client 207 wird anhand der Referenz der ausgeführten OPC UA Instanz, die ein entsprechendes PLC Objekt in der PLC Applikation 209 referenziert, über das Kommunikationsprotokoll bzw. die Datenkommunikationsschnittstelle 217 die Information des referenzierten PLC Objekts in der PLC Applikation 209 zugänglich gemacht und in der ausgeführten bzw. aufgerufenen OPC UA Instanz gemäß dem Informationsmodell der jeweiligen Companion Specification angezeigt.

Eine entsprechende Datenkommunikation zwischen dem OPC UA Server 205 und dem OPC UA Client 207 der Datenverarbeitungseinheit 203 wird über die Datenverbindung 219 realisiert. Die Datenverbindung 219 kann beispielsweise eine Internetverbindung sein und auf einem entsprechenden Datenkommunikationsprotokoll basieren.

Über die Entwicklungsumgebung 211 und das erste Entwicklungsmodul 213 und das zweite Entwicklungsmodul 215 ist der Anwender in der Lage, gemäß dem Verfahren 100 zur Verknüpfung von OPC UA Instanzen und PLC Objekten einen PLC Code eines Steuerprogramms für das Automatisierungssystem 200 unter Berücksichtigung von OPC UA Companion Specifications zu generieren. So kann der Anwender gemäß den in der Companion Specification definierten OPC UA Objekttypen entsprechende PLC Objekttypen erzeugen, die zur Instanziierung und zur Generierung von PLC Objekten herangezogen werden können, die jeweils zur Beschreibung von Komponenten des zu steuernden Automatisierungsprozesses dienen.

Darüber hinaus ist der Anwender in der Lage, auf Basis der OPC UA Objekttypen OPC UA Instanzen zur Beschreibung der Komponenten des zu steuernden Automatisierungsprozesses zu generieren und eine Verknüpfung bzw. Zuordnung zwischen den generierten OPC UA Instanzen und den generierten PLC Objekten zu erzeugen. Die derart generierten OPC UA Instanzen und PLC Objekte können im Adressraum eines OPC UA Servers 205 bzw. in einer PLC Applikation 209 einer Steuereinheit 201 eines Automatisierungssystems 200 abgelegt werden, sodass auf Basis der erzeugten PLC Objekte bzw. des erzeugten PLC Codes der Automatisierungsprozess gesteuert bzw. auf Basis der generierten OPC UA Instanzen Information gemäß einem durch eine entsprechende Companion Specification definierten Informationsmodells dargestellt werden kann.

Alternativ kann auch bereits programmierter PLC Code eines bereits bestehenden Steuerprogramms berücksichtigt werden und durch den Anwender unter Zuhilfenahme der Entwicklungsumgebung 211 lediglich OPC UA Instanzen generiert und entsprechende Verknüpfungen zwischen generierten OPC UA Instanzen und PLC Objekten des PLC Codes erzeugt werden.

Die Datenverarbeitungseinheit 203 kann ein PC einer Leitebene des Automatisierungssystems 200 sein. Alternativ kann die Datenverarbeitungseinheit 203 ein externer Computer sein, und eine Datenkommunikation kann beispielsweise über einen Cloudserver mit dem Automatisierungssystem 200 stattfinden. Alternativ kann die Datenverarbeitungseinheit 203 eine weitere Steuereinheit des Automatisierungssystems 200 sein.

Alternativ können der OPC UA Client 207 und die Entwicklungsumgebung 211 auf unterschiedlichen Datenverarbeitungseinheiten angeordnet sein. Beispielsweise kann die Entwicklungsumgebung 211 auf einem eigens zu Entwicklungszwecken eingerichteten Entwicklungscomputer angeordnet sein.

Alternativ kann der OPC UA Server 205 auf einer weiteren Datenverarbeitungseinheit des Automatisierungssystems 200 installiert sein, die keine Steuereinheit des Automatisierungssystems 200 ist. Alternativ kann das Automatisierungssystem 200 eine Mehrzahl von Steuereinheiten 201 umfassen, auf der jeweils wenigstens ein OPC UA Server 205 installiert ist. Alternativ können auf einer Steuereinheit 201 des Automatisierungssystems 200 eine Mehrzahl von OPC UA Servern 205 installiert sein, die jeweils über eine Datenkommunikationsschnittstelle 217 verbunden sind und eine Datenkommunikation auf Basis des OPC UA Kommunikationsstandards durchführen können.

Alternativ kann die Entwicklungsumgebung 211 auf einem Cloudserver installiert sein. Alternativ kann die Entwicklungsumgebung 211 insbesondere das erste Entwicklungsmodul 213 und das zweite Entwicklungsmodul 215 getrennt auf verschiedenen Datenverarbeitungseinheiten 203 installiert sein, sodass verschiedene Vorgänge des erfindungsgemäßen Verfahrens 100 getrennt voneinander durchgeführt werden.

Die Entwicklungsumgebung 211 ist eingerichtet, das erfindungsgemäße Verfahren 100 auszuführen. Die Entwicklungsumgebung 211 ist damit eingerichtet, eine Mehrzahl von OPC UA Nodesets einer Mehrzahl verschiedener Companion Specifications gemäß dem Verfahren 100 zu berücksichtigen. Die Entwicklungsumgebung 211 ist ferner eingerichtet, eine Mehrzahl von PLC Codes eines Steuerprogramms und/oder einer Mehrzahl von Steuerprogrammen eines Automatisierungssystems 200 zu genieren.

### Bezugszeichenliste

- 100: Verfahren zur Verknüpfung von OPC-UA-Objekten und PLC-Objekten
- 101: Leseschritt
- 103: Instanziierungsschritt
- 105: Objektgenerierungsschritt
- 107: Verknüpfungsschritt
- 109: Objekttypgenerierungsschritt
- 111: erster Markierungsschritt
- 113: zweiter Markierungsschritt
- 115: Zuordnungsschritt
- 117: Dokumentgenerierungsschritt

- 200: Automatisierungssystem
- 201: Steuereinheit
- 203: Datenverarbeitungseinheit
- 205: OPC UA Server
- 207: OPC UA Client
- 209: PLC Application
- 211: Entwicklungsumgebung
- 213: erstes Entwicklungsmodul
- 215: zweites Entwicklungsmodul
- 217: Datenkommunikationsschnittstelle
- 219: Datenverbindung
- 221: Datenbus
- 223: Feldgerät

## Patentansprüche

1. Verfahren zur Datenkommunikation zwischen einem OPC UA-Client (207) und einem OPC UA Server (205) des Datenkommunikationsstandards Open Platform Communication Unified Architecture OPC UA in einem Automatisierungssystem (200), umfassend
Ausführen eines Verfahrens (100) zum Verknüpfen von Objekten des Datenkommunikationsstandards Open Platform Communication Unified Architecture OPC UA mit Objekten eines Codes einer speicherprogrammierbaren Steuerung, PLC Code, eines Steuerprogramms einer Steuereinheit (201) des Automatisierungssystems (200), umfassend:
Einlesen eines OPC UA Nodesets einer Companion Specification durch ein erstes Entwicklungsmodul (213) einer Entwicklungsumgebung (211) in einem Leseschritt (101), wobei das OPC UA Nodeset eine Definition von OPC UA Objekttypen eines in der Companion Specification definierten OPC UA Informationsmodells umfasst;
Generieren von OPC UA Instanzen der OPC UA Objekttypen des OPC UA Nodesets für das Automatisierungssystem (200) und Zusammenfassen der OPC UA Instanzen in einem OPC UA Instanznodeset in einem Instanziierungsschritt (103), wobei generierte Instanzen des OPC UA des Instanznodesets Komponenten eines Automatisierungsprozesses des Automatisierungssystems (200) beschreiben und jeweils einen OPC UA Objekttyp des OPC UA Nodesets aufweisen;
Automatisches Generieren von PLC Objekttypen auf Basis der OPC UA Objekttypen des OPC UA Nodesets der Companion Specification durch das erste Entwicklungsmodul (213) in einem Objekttypgenerierungsschritt (109), wobei zu jedem OPC UA Objekttyp ein entsprechender PLC Objekttyp generiert wird;
Automatisches Generieren von PLC Objekten in einem PLC Code eines Steuerprogramms des Automatisierungssystems (200) basierend auf den OPC UA Instanzen durch das erste Entwicklungsmodul (213) in einem Objektgenerierungsschritt (105), wobei PLC Objekte im PLC Code Komponenten des Automatisierungsprozesses des Automatisierungssystems (200) beschreiben und jeweils einen PLC Objekttyp aufweisen, und wobei PLC-Objekte und OPC-UA Instanzen, die jeweils gleiche Komponenten des Automatisierungsprozesses beschreiben, gleiche Datenstrukturen aufweisen;
Verknüpfen der OPC UA Instanzen des OPC UA Instanznodesets mit PLC Objekten des PLC Codes des Steuerprogramms in einem Verknüpfungsschritt (107), wobei jede OPC UA Instanz mit genau dem PLC Objekt verknüpft wird, das im Steuerprogramm die gleiche Komponente des Automatisierungsprozesses des Automatisierungssystems (200) beschreibt, wobei die OPC UA Instanzen und die PLC Objekte jeweils als zusammenhängende Einheiten über genau eine Verknüpfung verknüpft werden, wobei Untereinheiten der OPC UA Instanz mit entsprechenden Untereinheiten des PLC Objekts über die genau eine Verknüpfung zwischen der OPC UA Instanz und dem PLC Objekt verknüpft sind, und wobei durch eine Verknüpfung einer OPC UA Instanz des OPC UA Instanznodesets mit einem PLC Objekt des PLC Codes bewirkt ist, dass Information des PLC Objekts über ein Ausführen der OPC UA Instanz zugänglich ist; und
Ausführen einer OPC-UA Instanz und Einlesen und/oder Modifizieren durch Ausführen eines Schreibbefehls von Information eines mit der OPC-UA Instanz verknüpften PLC Objekts in einem Adressraum des OPC UA Servers (205) durch den OPC-UA Client (207).

2. Verfahren (100) nach Anspruch 1, ferner umfassend:
Ausführen einer OPC UA Instanz;
Darstellen von Information des mit der OPC UA Instanz verknüpften PLC Objekts in der OPC UA Instanz; und/oder
Schreiben von Information in das mit der OPC UA Instanz verknüpfte PLC Objekt;
wobei die dargestellte und/oder geschriebene Information eine durch das OPC UA Objekt dargestellte Komponente des Automatisierungsprozesses des Automatisierungssystems betrifft.

3. Verfahren (100) nach Anspruch 2, wobei das Ausführen der OPC UA Instanz ferner betrifft:
Aufrufen der OPC UA Instanz auf einem OPC UA Server (205) durch einen OPC UA Client (207);
Senden eines Lesebefehls und/oder eines Schreibbefehls vom OPC UA Client (207) an den OPC UA Server (205);
Darstellen der im Lesebefehl angeforderten Information des mit der OPC UA Instanz verknüpften PLC Objekts in der OPC UA Instanz; und/oder
Schreiben der Information des Schreibbefehls in das mit der OPC UA Instanz verknüpfte PLC Objekt.

4. Verfahren (100) nach Anspruch 3, wobei der OPC UA Server (205) in einer Steuereinheit (201) des Automatisierungssystems (200) eingerichtet ist, wobei der OPC UA Client (207) in einer Datenverarbeitungseinheit (203) eingerichtet ist, wobei die Datenverarbeitungseinheit (203) und die Steuereinheit (201) über eine Datenverbindung (219) miteinander verbunden sind, und wobei über die Datenverbindung (219) eine Datenkommunikation zwischen dem OPC UA Client (207) und dem OPC UA Server (205) ermöglicht ist.

5. Verfahren (100) nach einem der voranstehenden Ansprüche, wobei der Objektgenerierungsschritt (105) umfasst:
Generieren von PLC Objekten auf Basis der OPC UA Instanzen des OPC UA Instanznodesets, wobei für jede OPC UA Instanz des OPC UA Instanznodessets ein PLC Objekt des PLC Codes generiert wird, das einen dem OPC UA Objekttyp der jeweiligen OPC UA Instanz entsprechenden PLC Objekttyp aufweist und dieselbe Komponente des Automatisierungsprozesses des Automatisierungssystems (200) beschreibt wie die entsprechende OPC UA Instanz.

6. Verfahren (100) nach Anspruch 5, wobei der Instanziierungsschritt (103) ferner umfasst:
Markieren einer jeden OPC UA Instanz des OPC UA Instanznodesets mit einem ersten Zuordnungsattribut in einem ersten Markierungsschritt (111), wobei durch das erste Zuordnungsattribut die jeweilige OPC UA Instanz eindeutig identifizierbar ist;
wobei der Objektgenerierungsschritt (105) ferner umfasst:
Markieren eines jeden PLC Objekts mit einem zweiten Zuordnungsattribut in einem zweiten Markierungsschritt (113), wobei durch das zweite Zuordnungsattribut das jeweilige PLC Objekt eindeutig identifizierbar ist; und
wobei der Verknüpfungsschritt (107) ferner umfasst:
Zuordnen einer OPC UA Instanz zu einem PLC Objekt auf Basis des ersten Zuordnungsattributs der OPC UA Instanz und des zweiten Zuordnungsattributs des PLC Objekts in einem Zuordnungsschritt (115), und
Verknüpfen von jeweils einer OPC UA Instanz des OPC UA Instanznodesets mit jeweils dem im Zuordnungsschritt (115) der OPC UA Instanz zugeordneten PLC Objekt.

7. Verfahren (100) nach Anspruch 6, wobei die Verknüpfung der OPC UA Instanzen mit den PLC Objekten über eine Datenschnittstelle (217) realisiert ist, wobei unter Berücksichtigung der Zuordnungsattribute über die Datenschnittstelle (217) zwischen den jeweils zugeordneten OPC UA Instanzen und PLC Objekten ein Informationstransfer ermöglicht ist, und wobei das Ausführen der OPC UA Instanz ferner betrifft:
Austauschen von Daten zwischen der aufgerufenen OPC UA Instanz und dem verknüpften PLC Objekt über die Datenschnittstelle (217).

8. Verfahren (100) nach einem der voranstehenden Ansprüche, wobei der Objektgenerierungsschritt (105) umfasst:
Generieren von PLC Objekten in einem PLC Code eines Steuerprogramms des Automatisierungssystems (200) auf Basis der im Objekttypgenerierungsschritt (109) generierten PLC Objekttypen.

9. Verfahren (100) nach einem der voranstehenden Ansprüche, wobei der Objekttypgenerierungsschritt (109) ferner umfasst:
Erstellen wenigstens einer PLC Bibliothek, die die generierten PLC Objekttypen umfasst.

10. Verfahren (100) nach einem der voranstehenden Ansprüche, ferner umfassend: Generieren wenigstens eines Extensible Markup Language XML-Dokuments entsprechend Vorgaben des PLCopen Konsortiums, das die generierten PLC Objekttypen und/oder die generierten PLC Objekte umfasst, in einem Dokumentgenerierungsschritt (117).

11. Entwicklungsumgebung (211) zum Ausführen des Verfahrens (100) nach einem der voranstehenden Ansprüche 1 bis 10, wobei die Entwicklungsumgebung (211) umfasst:
ein erstes Entwicklungsmodul (213), wobei das erste Entwicklungsmodul (213) eingerichtet ist:
wenigstens ein OPC UA Nodeset wenigstens einer OPC UA Companion Specification einzulesen, wobei das wenigstens eine OPC UA Nodeset eine Definition von OPC UA Objekttypen eines in der Companion Specification definierten OPC UA Informationsmodells umfasst, und
auf Basis der OPC UA Objekttypen des eingelesen wenigstens einen OPC UA Nodesets den OPC UA Objekttypen automatisch entsprechende PLC Objekttypen zu generieren, und
wenigstens ein OPC UA Instanznodeset von Instanzen der OPC UA Objekttypen des wenigstens einen OPC UA Nodesets für ein Automatisierungssystem (200) einzulesen, wobei OPC UA Instanzen des OPC UA Instanznodesets Komponenten eines Automatisierungsprozesses des Automatisierungssystems (200) beschreiben und jeweils einen OPC UA Objekttyp des OPC UA Nodesets aufweisen, und
auf Basis der OPC UA Instanzen des eingelesen wenigstens einen OPC UA Instanznodesets den OPC UA Instanzen automatisch entsprechende PLC Objekte zu generieren.

12. Entwicklungsumgebung (211) nach Anspruch 11, ferner umfassend:
ein zweites Entwicklungsmodul (215), wobei das zweite Entwicklungsmodul (215) eingerichtet ist:
wenigstens ein OPC UA Nodeset wenigstens einer OPC UA Companion Specification einzulesen,
die OPC UA Objekttypen des eingelesen wenigstens einen OPC UA Nodesets in einer graphischen Umgebung darzustellen, und
einem Nutzer in der graphischen Umgebung zu ermöglichen, aus den OPC UA Objekttypen für ein Automatisierungssystem (200) OPC UA Instanzen zu generieren und wenigstens ein OPC UA Instanznodeset zu erzeugen, wobei OPC UA Instanzen des wenigstens einen OPC UA Instanznodesets Komponenten des Automatisierungsprozesses des Automatisierungssystems (200) beschreiben und jeweils einen OPC UA Objekttyp des OPC UA Nodesets aufweisen, und
OPC UA Instanzen des wenigstens einen OPC UA Instanznodesets und PLC Objekte eines PLC Codes eines Steuerprogramms des Automatisierungssystems (200) in der graphischen Umgebung darzustellen und einem Nutzer zu ermöglichen, in der graphischen Umgebung eine Verknüpfung zwischen OPC UA Instanzen des wenigstens einen OPC UA Istanznodesets und PLC Objekten des PLC Codes herzustellen, wobei durch eine Verknüpfung einer OPC UA Instanz des OPC UA Instanznodesets mit einem PLC Objekt des PLC Codes bewirkt ist, dass Information des PLC Objekts über ein Ausführen der OPC UA Instanz zugänglich ist.

13. Entwicklungsumgebung (211) nach Anspruch 11 oder 12, wobei die Entwicklungsumgebung (211) ferner eingerichtet ist, XML-Dokumente entsprechend Vorgaben des PLCopen Konsortiums zu generieren, die generierte PLC Objekttypen und/oder PLC Objekte umfassen.

14. Automatisierungssystem (200) mit einer Steuereinheit (201), einer Mehrzahl von Feldgeräten (223), die über einen Datenbus (221) mit der Steuereinheit (201) verbunden sind, und einer Datenverarbeitungseinheit (203), die über eine Datenverbindung (219) mit der Steuereinheit (201) verbunden ist, wobei auf der Datenverarbeitungseinheit (203) ein OPC UA Client (205) und eine Entwicklungsumgebung (211) nach einem der voranstehenden Ansprüche 11 bis 13 eingerichtet sind, wobei auf der Steuereinheit (201) ein OPC UA Server (207) und eine PLC Applikation (209) eingerichtet sind, die über eine Datenkommunikationsschnittstelle (217) miteinander verbunden sind, und wobei die Entwicklungsumgebung (211) eingerichtet ist, ein Verfahren (100) nach einem der voranstehenden Ansprüche 1 bis 10 auszuführen.

## Claims

1. A method for data communication between an OPC UA client (207) and an OPC UA server (205) of the Open Platform Communication Unified Architecture OPC UA standard in an automation system (200), comprising
carrying out a method (100) for linking objects of the Open Platform Communication Unified Architecture OPC UA data communication standard with objects of a PLC code of a code of a programmable logic controller, PLC code of a control program of a controller (201) of the automation system (200), comprising:
reading in, using a first development module (213) in a development environment (211), an OPC UA node set of a Companion Specification in a reading step (101), wherein the OPC UA node set comprises a definition of OPC UA object types of an OPC UA information model defined in the Companion Specification;
generating OPC UA instances of the OPC UA object types of the OPC UA node set for the automation system (200) and combining the OPC UA instances in an OPC UA instance node set in an instantiating step (103), wherein generated instances of the OPC UA instance node set describe components of an automation process of the automation system (200) and each comprise an OPC UA object type of the OPC UA node set;
automatically generating PLC object types on the basis of the OPC UA object types of the OPC UA node set of the Companion Specification using the first development module (213) in an object-type-generating step (109), wherein a corresponding PLC object type is generated for each OPC UA object type;
automatically generating PLC objects in a PLC code of a control program of the automation system (200) based on the OPC UA instances using the first development module (213) in an object-generating step (105), wherein PLC objects in the PLC code describe components of the automation process of the automation system (200) and each comprise a PLC object type, and wherein PLC objects and OPC UA instances which each describe the same components of the automation process comprise the same data structures;
linking the OPC UA instances of the OPC UA instance node set to PLC objects of the PLC code of the control program in a linking step (107), wherein each OPC UA instance is linked to exactly the PLC object which describes the same component of the automation process of the automation system (200) in the control program, wherein the OPC UA instances and the PLC objects are each linked as continuous units via precisely one link, wherein the subunits of the OPC UA instance are linked to corresponding subunits of the PLC object via the precisely one link between the OPC UA instance and the PLC object, and wherein linking an OPC UA instance of the OPC UA instance node set to a PLC object of the PLC code causes information of the PLC object to be accessible by executing of the OPC UA instance; and
carrying out a OPC UA instance and reading in and/or modifying by carrying out a write command of information of a PLC object linked to the OPC UA instance in an address space of the OPC UA server (205) with the aid of the OPC UA client (207).

2. The method (100) of claim 1, further comprising:
executing an OPC UA instance;
displaying information of the PLC object linked to the OPC UA instance in the OPC UA instance; and/or
writing information to the PLC object linked to the OPC UA instance;
wherein the displayed and/or written information refers to a component of the automation process of the automation system represented by the OPC UA object.

3. The method (100) of claim 2, wherein executing the OPC UA instance further relates to:
accessing the OPC UA instance on an OPC UA server (205) by an OPC UA client (207);
sending a read command and/or a write command from the OPC UA client (207) to the OPC UA server (205);
displaying the information requested in the read command of the PLC object linked to the OPC UA instance in the OPC UA instance; and/or
writing the information of the write command into the PLC object linked to the OPC UA instance.

4. The method (100) according to claim 3, wherein the OPC UA server (205) is set up in a controller (201) of the automation system (200), wherein the OPC UA client (207) is set up in a data-processing unit (203), wherein the data-processing unit (203) and the controller (201) are connected to each other via a data connection (219), and wherein data communication between the OPC UA client (207) and the OPC UA server (205) is enabled via the data connection (219).

5. The method (100) according to any one of the preceding claims, wherein the object-generating step comprises (105):
generating PLC objects on the basis of the OPC UA instances of the OPC UA instance node set, wherein for each OPC UA instance of the OPC UA instance node set a PLC object of the PLC code is generated which has a PLC object type corresponding to the OPC UA object type of the respective OPC UA instance and describes the same component of the automation process of the automation system (200) as the corresponding OPC UA instance.

6. The method (100) according to claim 5, wherein the instantiating step (103) further comprises:
marking each OPC UA instance of the OPC UA instance node set with a first mapping attribute in a first marking step (111), wherein the respective OPC UA instance is identifiable in a unique manner due to the first allocation attribute;
wherein the object-generating step (105) further comprises:
marking each PLC object with a second allocation attribute in a second marking step (113), wherein the respective PLC object is identifiable in a unique manner due to the second allocation attribute; and
wherein the linking step (107) further comprises:
allocating an OPC UA instance with a PLC object based on the first allocation attribute of the OPC UA instance and the second allocation attribute of the PLC object in an allocation step (115), and
linking one OPC UA instance of the OPC UA instance node set to the PLC object allocated to the OPC UA instance in the allocating step (115).

7. The method (100) according to claim 6, wherein the linking of the OPC UA instances with the PLC objects is realized via a data interface (217), wherein an information transfer is enabled between the respectively allocated OPC UA instances and PLC objects taking into account the allocation attributes via the data interface (217), and wherein executing the OPC UA instance further relates to: exchanging data between the accessed OPC UA instance and the linked PLC object via the data interface (217).

8. The method (100) according to any one of the preceding claims, wherein the object-generating step comprises (105):
generating PLC objects in a PLC code of a control program of the automation system (200) based on the PLC object types generated in the object-type-generating step (109).

9. The method (100) according to any one of the preceding claims, wherein the object type generating step (109) further comprises:
creating at least one PLC library that includes the generated PLC object types.

10. The method (100) according to any one of the preceding claims, further comprising:
generating at least one Extensible Markup Language XML document according to specifications of the PLCopen consortium comprising the generated PLC object types and/or the generated PLC objects in a document-generating step (117).

11. A development environment (211) for executing the method (100) according to any one of the preceding claims 1 to 10, wherein the development environment (211) comprises:
a first development module (213), wherein the first development module (213) is set up:
reading in at least one OPC UA node set of at least one OPC UA Companion Specification, wherein the at least one OPC UA node set comprises a definition of OPC UA object types of an OPC UA information model defined in the Companion Specification, and
automatically generating PLC object types corresponding to the OPC UA object types on the basis of the OPC UA object types of the read-in at least one OPC UA node set, and
reading in at least one OPC UA instance node set of instances of the OPC UA object types of the at least one OPC UA node set for an automation system (200), wherein OPC UA instances of the OPC UA instance node set describe components of an automation process of the automation system (200) and each have an OPC UA object type of the OPC UA node set, and
generating PLC objects corresponding to the OPC UA instances on the basis of the OPC UA instances of the read-in at least one OPC UA instance node set.

12. The development environment (211) of claim 12, further comprising:
a second developing module (215), wherein the second developing module (215) is embodied:
to read in at least one OPC UA node set of at least one OPC UA Companion Specification,
to display the OPC UA object types of the read-in at least one OPC UA node set in a graphical environment, and
to enable a user in the graphical environment to generate OPC UA instances from the OPC UA object types for an automation system (200) and to generate at least one OPC UA instance node set, wherein OPC UA instances of the at least one OPC UA instance node set describe components of the automation process of the automation system (200) and each comprise an OPC UA object type of the OPC UA node set, and
Displaying OPC UA instances of the at least one OPC UA instance node set and PLC objects of a PLC code of a control program of the automation system (200) in the graphical environment and enabling a user to establish a link in the graphical environment between OPC UA instances of the at least one OPC UA instance node set and PLC objects of the PLC code, wherein linking an OPC UA instance of the OPC UA instance node set with a PLC object of the PLC code has the effect of rendering information of the PLC object accessible by executing the OPC UA instance.

13. The development environment (211) according to claim 11 or 12, wherein the development environment (211) is further embodied to generate XML documents according to specifications of the PLCopen consortium comprising generated PLC object types and/or PLC objects.

14. An automation system (200) comprising a controller (201), a plurality of field devices (223) connected to the controller (201) via a data bus (221), and a data-processing unit (203) connected to the controller (201) via a data connection (219), wherein an OPC UA client (205) and a development environment (211) according to any one of the preceding claims 11 to 13 are installed on the data-processing unit (203), wherein an OPC UA server (207) and a PLC application (209) are installed on the controller (201), which are connected to each other via a data communication interface (217), and wherein the development environment (211) is configured to execute a method (100) according to any one of the preceding claims 1 to 10.

## Revendications

1. Procédé de communication de données entre un client OPC UA (207) et un serveur OPC UA (205) de la norme de communication de données de l'architecture unifiée de communication en plateforme ouverte, OPC UA, dans un système d'automatisation (200), comprenant
l'exécution d'un procédé (100) pour lier des objets de la norme de communication de données de l'architecture unifiée de communication en plateforme ouverte, OPC UA, à des objets d'un code d'un automate programmable, code PLC, d'un programme de commande d'une unité de commande (201) du système d'automatisation (200), comprenant :
l'importation d'un ensemble de noeuds OPC UA d'une spécification complémentaire par un premier module de développement (213) d'un environnement de développement (211) dans une étape d'importation (101), dans lequel l'ensemble de noeuds OPC UA comprend une définition de types d'objet OPC UA d'un modèle d'information OPC UA défini dans la spécification complémentaire ;
la génération d'instances OPC UA des types d'objet OPC UA de l'ensemble de noeuds OPC UA pour le système d'automatisation (200) et le regroupement des instances OPC UA dans un ensemble de noeuds d'instance OPC UA dans une étape d'instanciation (103), dans lequel des instances générées de l'OPC UA de l'ensemble de noeuds d'instance décrivent des composants d'un processus d'automatisation du système d'automatisation (200) et présentent respectivement un type d'objet OPC UA de l'ensemble de noeuds OPC UA ;
la génération automatique de types d'objet PLC sur la base des types d'objet OPC UA de l'ensemble de noeuds OPC UA de la spécification complémentaire par le premier module de développement (213) dans une étape de génération de type d'objet (109), dans lequel un type d'objet PLC correspondant est généré pour chaque type d'objet OPC UA ;
la génération automatique d'objets PLC dans un code PLC d'un programme de commande du système d'automatisation (200) sur la base des instances OPC UA par le premier module de développement (213) dans une étape de génération d'objet (105), dans lequel les objets PLC dans le code PLC décrivent des composants du processus d'automatisation du système d'automatisation (200) et présentent respectivement un type d'objet PLC, et dans lequel les objets PLC et les instances OPC UA qui décrivent respectivement les mêmes composants du processus d'automatisation présentent les mêmes structures de données ;
la liaison des instances OPC UA de l'ensemble de noeuds d'instance OPC UA à des objets PLC du code PLC du programme de commande dans une étape de liaison (107), dans lequel chaque instance OPC UA est liée exactement à l'objet PLC qui décrit dans le programme de commande le même composant du processus d'automatisation du système d'automatisation (200), dans lequel les instances OPC UA et les objets PLC sont respectivement liés en tant qu'unités cohérentes par exactement une liaison, dans lequel des sous-unités de l'instance OPC UA sont liées à des sous-unités correspondantes de l'objet PLC par l'intermédiaire de ladite exactement une liaison entre l'instance OPC UA et l'objet PLC, et dans lequel une liaison d'une instance OPC UA de l'ensemble de noeuds d'instance OPC UA à un objet PLC du code PLC fait que des informations de l'objet PLC sont accessibles par l'exécution de l'instance OPC UA ; et
l'exécution d'une instance OPC UA et l'importation et/ou la modification par l'exécution d'une instruction d'écriture des informations d'un objet PLC lié à l'instance OPC UA dans un espace d'adresse du serveur OPC UA (205) par le client OPC UA (207).

2. Procédé (100) selon la revendication 1, comprenant en outre :
l'exécution d'une instance OPC UA ;
la représentation des informations de l'objet PLC lié à l'instance OPC UA dans l'instance OPC UA ; et/ou
l'écriture des informations dans l'objet PLC lié à l'instance OPC UA ;
dans lequel les informations représentées et/ou écrites concernent un composant, représenté par l'objet OPC UA, du processus d'automatisation du système d'automatisation.

3. Procédé (100) selon la revendication 2, dans lequel l'exécution de l'instance OPC UA concerne en outre :
l'appel de l'instance OPC UA sur un serveur OPC UA (205) par un client OPC UA (207) ;
l'envoi d'une instruction de lecture et/ou d'une instruction d'écriture du client OPC UA (207) au serveur OPC UA (205) ;
la représentation dans l'instance OPC UA des informations demandées dans l'instruction de lecture de l'objet PLC lié à l'instance OPC UA ; et/ou
l'écriture des informations de l'instruction d'écriture dans l'objet PLC lié à l'instance OPC UA.

4. Procédé (100) selon la revendication 3, dans lequel le serveur OPC UA (205) est aménagé dans une unité de commande (201) du système d'automatisation (200), dans lequel le client OPC UA (207) est aménagé dans une unité de traitement de données (203), dans lequel l'unité de traitement de données (203) et l'unité de commande (201) sont liées l'une à l'autre par une liaison de données (219), et dans lequel la liaison de données (219) permet une communication de données entre le client OPC UA (207) et le serveur OPC UA (205).

5. Procédé (100) selon l'une quelconque des revendications précédentes, dans lequel l'étape de génération d'objet (105) comprend :
la génération d'objets PLC sur la base des instances OPC UA de l'ensemble de noeuds d'instance OPC UA, dans lequel pour chaque instance OPC UA de l'ensemble de noeuds d'instance OPC UA, un objet PLC du code PLC est généré qui présente un type d'objet PLC correspondant au type d'objet OPC UA de l'instance OPC UA respective et décrit le même composant du processus d'automatisation du système d'automatisation (200) que l'instance OPC UA correspondante.

6. Procédé (100) selon la revendication 5, dans lequel l'étape d'instanciation (103) comprend en outre :
le marquage de chaque instance OPC UA de l'ensemble de noeuds d'instance OPC UA avec un premier attribut d'affectation dans une première étape de marquage (111), dans lequel le premier attribut d'affectation permet d'identifier de manière univoque l'instance OPC UA respective ;
dans lequel l'étape de génération d'objet (105) comprend en outre :
le marquage de chaque objet PLC avec un deuxième attribut d'affectation dans une deuxième étape de marquage (113), dans lequel le deuxième attribut d'affectation permet d'identifier de manière univoque l'objet PLC respectif ; et
dans lequel l'étape de liaison (107) comprend en outre :
l'affectation d'une instance OPC UA à un objet PLC sur la base du premier attribut d'affectation de l'instance OPC UA et du deuxième attribut d'affectation de l'objet PLC dans une étape d'affectation (115), et
la liaison d'une instance OPC UA de l'ensemble de noeuds d'instance OPC UA respectivement à l'objet PLC affecté à l'instance OPC UA à l'étape d'affectation (115) .

7. Procédé (100) selon la revendication 6, dans lequel la liaison des instances OPC UA aux objets PLC est réalisée par l'intermédiaire d'une interface de données (217), dans lequel, en tenant compte des attributs d'affectation, l'interface de données (217) permet un transfert d'informations entre les instances OPC UA respectivement affectées et les objets PLC, et dans lequel l'exécution de l'instance OPC UA concerne en outre :
l'échange de données entre l'instance OPC UA appelée et l'objet PLC lié par l'intermédiaire de l'interface de données (217).

8. Procédé (100) selon l'une quelconque des revendications précédentes, dans lequel l'étape de génération d'objet (105) comprend :
la génération d'objets PLC dans un code PLC d'un programme de commande du système d'automatisation (200) sur la base des types d'objet PLC générés à l'étape de génération de types d'objet (109).

9. Procédé (100) selon l'une quelconque des revendications précédentes, dans lequel l'étape de génération de types d'objet (109) comprend en outre :
la création d'au moins une bibliothèque PLC qui comprend les types d'objet PLC générés.

10. Procédé (100) selon l'une quelconque des revendications précédentes, comprenant en outre :
la génération d'au moins un document en langage de balisage extensible, XML, selon des spécifications du consortium PLCopen, qui comprend les types d'objet PLC générés et/ou les objets PLC générés dans une étape de génération de document (117).

11. Environnement de développement (211) permettant d'exécuter le procédé (100) selon l'une quelconque des revendications précédentes 1 à 10, l'environnement de développement (211) comprenant :
un premier module de développement (213), le premier module de développement (213) étant conçu pour :
importer au moins un ensemble de noeuds OPC UA d'une spécification complémentaire OPC UA, dans lequel ledit au moins un ensemble de noeuds OPC UA comprend une définition de types d'objet OPC UA d'un modèle d'information OPC UA défini dans la spécification complémentaire, et
sur la base des types d'objet OPC UA dudit au moins un ensemble de noeuds OPC UA importé, générer automatiquement des types d'objet PLC correspondant aux types d'objet OPC UA, et
importer au moins un ensemble de noeuds d'instance OPC UA d'instances des types d'objet OPC UA dudit au moins un ensemble de noeuds OPC UA pour un système d'automatisation (200), dans lequel les instances OPC UA de l'ensemble de noeuds d'instance OPC UA décrivent des composants d'un processus d'automatisation du système d'automatisation (200) et présentent respectivement un type d'objet OPC UA de l'ensemble de noeuds OPC UA, et
sur la base des instances OPC UA dudit au moins un ensemble de noeuds d'instance OPC UA importé, générer automatiquement des objets PLC correspondant aux instances OPC UA.

12. Environnement de développement (211) selon la revendication 11, comprenant en outre :
un deuxième module de développement (215), le deuxième module de développement (215) étant conçu pour :
importer au moins un ensemble de noeuds OPC UA d'au moins une spécification complémentaire OPC UA,
représenter dans un environnement graphique les types d'objet OPC UA dudit au moins un ensemble de noeuds OPC UA importé, et
permettre à un utilisateur dans l'environnement graphique de générer à partir des types d'objet OPC UA pour un système d'automatisation (200) des instances OPC UA et de générer au moins un ensemble de noeuds d'instances OPC UA, dans lequel les instances OPC UA dudit au moins un ensemble de noeuds d'instance OPC UA décrivent des composants du processus d'automatisation du système d'automatisation (200) et présentent respectivement un type d'objet OPC UA de l'ensemble de noeuds OPC UA, et
représenter dans l'environnement graphique des instances OPC UA dudit au moins un ensemble de noeuds d'instance OPC UA et des objets PLC d'un code PLC d'un programme de commande du système d'automatisation (200), et permettre à un utilisateur de créer dans l'environnement graphique une liaison entre les instances OPC UA dudit au moins un ensemble de noeuds d'instance OPC UA et des objets PLC du code PLC, dans lequel une liaison d'une instance OPC UA de l'ensemble de noeuds d'instance OPC UA avec un objet PLC du code PLC fait que les informations de l'objet PLC concernant une exécution de l'instance OPC UA sont accessibles.

13. Environnement de développement (211) selon la revendication 11 ou 12, dans lequel l'environnement de développement (211) est en outre conçu pour générer des documents XML selon les spécifications du consortium PLCopen, qui comprennent les types d'objet PLC et/ou des objets PLC générés.

14. Système d'automatisation (200), comprenant une unité de commande (201), une pluralité d'appareils de terrain (223) qui sont reliés par un bus de données (221) à l'unité de commande (201), et une unité de traitement de données (203) qui est reliée par l'intermédiaire d'une liaison de données (219) à l'unité de commande (201), dans lequel un client OPC UA (205) et un environnement de développement (211) selon l'une quelconque des revendications précédentes 11 à 13 sont aménagés sur l'unité de traitement de données (203), dans lequel un serveur OPC UA (207) et une application PLC (209) sont aménagés sur l'unité de commande (201), qui sont reliés ensemble par une interface de communication de données (217), et dans lequel l'environnement de développement (211) est conçu pour exécuter un procédé (100) selon l'une quelconque des revendications précédentes 1 à 10.
